# EUROPEAN PATENT APPLICATION

(11) **EP 4 451 389 A1**
(43) Date of publication of application: **23.10.2024**
(21) Application number: 22947448.1
(22) Date of filing: 24.06.2022
(51) Int. Cl.: H01M 4/58, H01M 10/0525

(54) **POSITIVE ELECTRODE MATERIAL COMPOSITION AND PREPARATION METHOD THEREFOR, POSITIVE ELECTRODE SHEET COMPRISING POSITIVE ELECTRODE MATERIAL COMPOSITION, SECONDARY BATTERY, AND ELECTRICAL DEVICE**

(71) Applicant: Contemporary Amperex Technology (Hong Kong) Limited, Central, Central And Western District (HK)
(72) Inventor: MA, Qingyan, Ningde, Fujian 352100 (CN); ZHAO, Yuzhen, Ningde, Fujian 352100 (CN); GUAN, Yingjie, Ningde, Fujian 352100 (CN); WEN, Yan, Ningde, Fujian 352100 (CN); HUANG, Qisen, Ningde, Fujian 352100 (CN)
(74) Representative: Gong, Jinping
(86) International application number: PCT/CN2022/101330
(87) International publication number: WO 2023/245682

(57) **Abstract**

The present application provides a positive electrode material composition, a method for the preparation thereof and a positive electrode plate, a secondary battery and an electrical device containing the same. The positive electrode material composition comprises a positive electrode active material with a core-shell structure and an organopolysiloxane compound, wherein said core comprises Li₁₊ₓMn_{1-y}A_{y}P_{1-z}R_{z}O₄; and said shell comprises a first cladding layer covering said core and a second cladding layer covering said first cladding layer. The positive electrode material composition of the present application enables the secondary battery to have a higher energy density, while having improved cycle performance, safety performance and/or rate performance.

## Description

### TECHNICAL FIELD

The present application belongs to the technical field of battery, in particular to a positive electrode material composition, a method for the preparation thereof and a positive electrode plate, a secondary battery and an electrical device containing the same.

### BACKGROUND

In recent years, secondary batteries have been widely used in energy storage power systems such as hydro, thermal, wind and solar power plants, as well as electric tools, electric bicycles, electric motorcycles, electric vehicles, military equipment, aerospace and many other fields. With the application and promotion of secondary batteries, their safety performances are receiving more and more attention. Lithium manganese phosphate has become one of the most popular positive electrode active materials due to its high capacity, good safety performance and abundant raw material sources, however, lithium manganese phosphate is prone to manganese ion leaching out during charging, resulting in rapid capacity decay.

### SUMMARY

An object of the present application is to provide a positive electrode material composition, a method for the preparation thereof, and a positive electrode plate, a secondary battery and an electrical device containing the same. The positive electrode material composition enables the secondary battery adopting the positive electrode material composition to have a relatively high energy density, and an improved cycle performance, safety performance and/or rate performance.

A first aspect of the present application provides a positive electrode material composition, comprising a positive electrode active material with a core-shell structure and an organopolysiloxane compound, wherein said positive electrode active material comprises an core and a shell covering said core, said core comprises Li₁₊ₓMn_{1-y}A_{y}P_{1-z}R_{z}O₄, x is in the range of -0.100 to 0.100, optionally in the range of -0.100 to 0.006, y is in the range of 0.001 to 0.500, optionally in the range of 0.100 to 0.450, z is in the range of 0.001 to 0.100, said A comprises one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co and Mg, said R comprises one or more elements selected from B, Si, N and S; said shell comprises a first cladding layer covering said core and a second cladding layer covering said first cladding layer, said first cladding layer comprises pyrophosphate MP₂O₇ and phosphate XPO₄, said M and X each independently comprises one or more elements selected from Li, Fe, Ni, Mg, Co, Cu, Zn, Ti, Ag, Zr, Nb, and Al, and said second cladding layer comprises carbon.

In the present application, by doping lithium manganese phosphate with specific elements and subjecting to surface cladding, it is allowed to effectively inhibit leaching out of manganese ions in the process of intercalation-deintercalation of lithium while promoting migration of lithium ions. The combination of the positive electrode active material with the organopolysiloxane compound of the present application can alleviate erosion of the surface of the positive electrode active material caused by an electrolyte and reduce leaching out of manganese ions, so as to improve the electrochemical performance of the positive electrode active material. Therefore, positive electrode plates, secondary batteries and electrical devices adopting the positive electrode material composition of the present application may have a relatively high energy density, and an improved cycle performance, safety performance and/or rate performance.

In any embodiment of the present application, said organopolysiloxane compound comprises at least one structural unit shown in Formula 1, 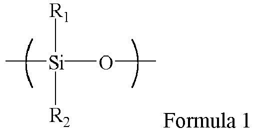 R₁ and R₂ each independently represent H or at least one functional group selected from the group consisting of: -COOH, -OH, -SH, -CN, -SCN, amino groups, phosphate groups, carboxylate groups, amide groups, aldehyde groups, sulfonyl groups, polyether chain segments, C₁-C₂₀ aliphatic hydrocarbyl groups, C₁-C₂₀ halogenated aliphatic hydrocarbyl group, C₁-C₂₀ heteroaliphatic hydrocarbyl groups, C₁-C₂₀ halogenated heteroaliphatic hydrocarbyl groups, C₆-C₂₀ aromatic hydrocarbyl groups, C₆-C₂₀ halogenated aromatic hydrocarbyl groups, C₂-C₂₀ heteroaromatic hydrocarbyl groups, and C₂-C₂₀ halogenated heteroaromatic groups. Optionally, R₁ and R₂ each independently represent H or at least one functional group selected from the group consisting of: -COOH, -OH, -SH, amino groups, phosphate groups, polyether chain segments, C₁-C₈ alkyl groups, C₁-C₈ haloalkyl groups, C₁-C₈ heteroalkyl groups, C₁-C₈ haloheteroalkyl groups, C₂-C₈ alkenyl groups, C₂-C₈ haloalkenyl groups, and phenyl. More optionally, R₁ and R₂ each independently represent H or at least one functional group selected from consisting of: -OH, -SH, amino groups, phosphate groups, polyether chain segments, C₁-C₈ alkyl groups, C₁-C₈ haloalkyl groups, C₁-C₈ heteroalkyl groups, C₁-C₈ haloheteroalkyl groups, C₂-C₈ alkenyl groups, and C₂-C₈ haloalkenyl groups.

As a result, the leaching out of manganese ions can be further reduced, and the cycle performance and/or high-temperature stability of batteries can be significantly improved.

In any embodiment of the present application, the organopolysiloxane compound comprises one or more selected from a linear polysiloxane, and a cyclic polysiloxane, optionally, the organopolysiloxane compound is selected from a linear polysiloxane.

As a result, erosion of the surface of the positive electrode active material caused by acidic substances in an electrolyte can be further alleviated, and the leaching out of manganese ions can be reduced, so as to significantly improve cycle performance and storage performance of secondary batteries. Due to delocalization of electrons in the ring of the cyclic polysiloxane, Si-O skeleton of the cyclic polysiloxane has a lower affinity to electron-rich F-containing ions than that of the linear polysiloxane, and thus its effect on the removal of F-containing ions in an electrolyte is slightly lower, its effect on the reduction of manganese ions leaching out is slightly weaker, and its effect on the improvement of cycle performance of secondary batteries is slightly worse.

In any embodiment of the present application, the linear polysiloxane further comprises a capping group. Optionally, the capping group comprises at least one functional groups selected from the group consisting of: polyether groups, C₁-C₈ alkyl groups, C₁-C₈ haloalkyl groups, C₁-C₈ heteroalkyl groups, C₁-C₈ haloheteroalkyl groups, C₂-C₈ alkenyl groups, C₂-C₈ haloalkenyl groups, C₆-C₂₀ aromatic hydrocarbyl groups, C₁-C₈ alkoxy groups, C₂-C₈ epoxy groups, hydroxyl groups, C₁-C₈ hydroxyalkyl groups, amino groups, C₁-C₈ aminoalkyl groups, carboxyl groups, and C₁-C₈ carboxyl alkyl groups.

In any embodiment of the present application, the linear polysiloxane comprises one or more of polydimethyl siloxane, polydiethyl siloxane, polymethyl ethyl siloxane, polymethyl vinyl siloxane, polyphenyl methyl siloxane, polymethyl hydrosiloxane, carboxyfunctionalized polysiloxane, polymethyl chloropropyl siloxane, polymethyl trifluoropropyl siloxane, perfluorooctyl methyl polysiloxane, mercaptopropyl polysiloxane, aminoethyl aminopropyl polydimethylsiloxane, methoxy terminated polydimethylsiloxane, hydroxypropyl terminated polydimethylsiloxane, aminopropyl terminated polydimethylsiloxane, epoxy end-capped polysiloxane, hydroxyl end-capped polydimethylsiloxane, polyether end-capped polydimethylsiloxane, pendent aminopropyl polysiloxane, pendent hydroxymethyl polysiloxane, pendent hydroxypropyl polysiloxane, pendent polyether-grafted polydimethylsiloxane, and pendent phosphate-grafted polydimethylsiloxane. Optionally, the linear polysiloxane comprises one or more of polydimethyl siloxane, polymethyl chloropropyl siloxane, polymethyl trifluoropropyl siloxane, mercaptopropyl polysiloxane, aminoethyl aminopropyl polydimethylsiloxane, hydroxyl end-capped polydimethylsiloxane, polyether end-capped polydimethylsiloxane, pendent phosphate-grafted polydimethylsiloxane.

In any embodiment of the present application, the cyclic polysiloxane comprises one or more of cyclic polydimethylsiloxane, cyclic polymethyl vinyl siloxane, cyclic polymethyl hydrosiloxane, and cyclic polymethyl trifluoropropyl siloxane. Optionally, the cyclic polysiloxane comprises one or more of 1,3,5,7-octamethyl cyclotetrasiloxane, 1,3,5,7-tetrahydro-1,3,5,7-tetramethyl cyclotetrasiloxane, cyclopenta polydimethylsiloxane, 2,4,6,8-tetramethyl cyclotetrasiloxane, 2,4,6,8-tetramethyl-2,4,6,8-tetravinyl cyclotetrasiloxane, hexadecamethyl cyclooctasiloxane, and tetradecamethyl cycloheptasiloxane.

In any embodiment of the present application, the organopolysiloxane compound has a number average molecular weight of less than 300,000, optionally of from 400 to 80,000. As a result, it is allowed for batteries to obtain good kinetic performance and high-temperature stability at the same time.

In any embodiment of the present application, a polar functional group is present in the organopolysiloxane compound in a mass percentage a, 0≤*α*< 50%, optionally, 5%≤*α*≤30%. As a result, it is allowed for batteries to obtain better improved cycle performance and/or high-temperature stability.

In any embodiment of the present application, the organopolysiloxane compound is present in an amount of 0.01 wt% to 2 wt%, optionally 0.1 wt% to 2 wt%, based on the total weight of the positive electrode material composition. As a result, it is allowed for batteries to obtain better improved cycle performance and/or high-temperature stability.

In any embodiment of the present application, said first cladding layer is applied in an amount of greater than 0 wt% and less than or equal to 7 wt%, optionally of from 4 wt% to 5.6 wt%, based on the weight of said core. As a result, it is allowed to effectively utilize the first cladding layer while not affecting kinetic performance of secondary batteries due to an excessively thick cladding layer.

In any embodiment of the present application, said second cladding layer is applied in an amount of greater than 0 wt% and less than or equal to 6 wt%, optionally of from 3 wt% to 5 wt%, based on the weight of said core. As a result, it is allowed to effectively enhance gram capacity of the positive electrode active material.

In any embodiment of the present application, said first cladding layer contains phosphate salts having a crystal plane spacing of 0.345 nm to 0.358 nm, and a crystal orientation (111) angle of 24.25° to 26.45°. As a result, it is allowed to further improve cycle performance and rate performance of secondary batteries.

In any embodiment of the present application, said first cladding layer contain pyrophosphate salts having a crystal plane spacing of 0.293 nm to 0.326 nm, and a crystal orientation (111) angle of from 26.41° to 32.57°. As a result, it is allowed to further improve cycle performance and rate performance of secondary batteries.

In any embodiment of the present application, in said core, a ratio of y to 1-y is from 1:10 to 10:1, optionally from 1:4 to 1:1. As a result, it is allowed to further improve energy density and cycle performance of secondary batteries.

In any embodiment of the present application, in said core, a ratio of z to 1-z is from 1:9 to 1:999, optionally from 1:499 to 1:249. As a result, it is allowed to further improve energy density and cycle performance of secondary batteries.

In any embodiment of the present application, a weight ratio of pyrophosphate salts and phosphate salts in said first cladding layer is from 1:3 to 3:1, optionally from 1:3 to 1:1, thereby facilitating synergistic effect of the pyrophosphate salts and the phosphate salts.

In any embodiment of the present application, the pyrophosphate salts and the phosphate salts in said first cladding layer each independently has a crystallinity of from 10% to 100%, optionally from 50% to 100%. As a result, it is allowed to fully exert the function of the pyrophosphate salts in hindering leaching out of manganese ions and of the phosphate salts in reducing content of lithium impurity on the surface and reducing interfacial side reactions.

In any embodiment of the present application, said A is at least two elements selected from Fe, Ti, V, Ni, Co, and Mg. As a result, it is allowed to further reduce the activity of surface oxygen and inhibit leaching out of manganese ions.

In any embodiment of the present application, said positive electrode active material has a Li/Mn antisite defect concentration of 4% or less, optionally of 2% or less. As a result, it is allowed to further improve gram capacity and rate performance of the positive electrode active material.

In any embodiment of the present application, said positive electrode active material has a lattice change rate of 8% or less, optionally of 4% or less. As a result, the rate performance of batteries can be improved.

In any embodiment of the present application, said positive electrode active material has a surface oxygen valence of -1.88 or less, optionally -1.89 to -1.98. As a result, the cycle performance and high-temperature storage performance of batteries can be improved.

In any embodiment of the present application, said positive electrode active material has a compaction density of 2.0 g/cm³ or more, optionally 2.2 g/cm³ or more, at 3 tonnes. As a result, the bulk energy density of batteries can be increased.

In any embodiment of the present application, the positive electrode material composition further comprises a conductive agent and a binder. Optionally, the binder is present in an amount of 1.79 wt% to 10 wt%, based on the total weight of the positive electrode material composition. Optionally, the conductive agent is present in an amount of 0.2 wt% to 10 wt%, based on the total weight of the positive electrode material composition.

In any embodiment of the present application, the positive electrode material composition has a powder resistivity of 4 Ω/cm to 55 Ω/cm, optionally from 4 Ω/cm to 40 Ω/cm at 12MPa. As a result, it is allowed for batteries to have a better kinetic performance.

In any embodiment of the present application, the positive electrode material composition has a specific surface area of 8 m²/g to 20 m²/g, optionally 8 m²/g to 15 m²/g. As a result, it is allowed for batteries to have a better electrochemical performance.

A second aspect of the present application provides a method for preparing a positive electrode material composition, comprising a step of providing a core material, a step of cladding and a step of mixing.

In the step of providing an core material, said core comprises Li₁₊ₓMn_{1-y}A_{y}P_{1-z}R_{z}O₄, wherein x is in the range of -0.100 to 0.100, optionally in the range of -0.100 to 0.006, y is in the range of 0.001 to 0.500, optionally in the range of 0.100 to 0.450, z is in the range of 0.001 to 0.100, said A comprises one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co and Mg, and said R comprises one or more elements selected from B, Si, N and S.

The step of cladding comprises providing an MP₂O₇ powder and an XPO₄ suspension comprising a carbon source, adding said core material, MP₂O₇ powder to the XPO₄ suspension comprising a carbon source and mixing them followed by sintering, thereby obtaining a positive electrode active material, wherein said M and X each are independently one or more elements selected from Li, Fe, Ni, Mg, Co, Cu, Zn, Ti, Ag, Zr, Nb and Al, and the resulting positive electrode active material has a core-shell structure comprising said core and a shell covering said core, said shell comprises a first cladding layer covering said core and a second cladding layer covering said first cladding layer, said first cladding layer comprising pyrophosphate salts MP₂O₇ and phosphate salts XPO₄, and said second cladding layer comprising carbon.

The step of mixing comprise mixing the resulting positive electrode active material with an organopolysiloxane compound, an optional binder and an optional conductive agent homogeneously to obtain a positive electrode material composition.

In any embodiment of the present application, the method for providing an core material comprises the following steps: Step (1), dissolving a manganese source, a source of element A and an acid in a solvent with stirring to obtain particles of a manganese salt doped with element A; Step (2), mixing the resulting particles of a manganese salt doped with element A with a lithium source, a phosphorus source, and a source of element R in a solvent with stirring to obtain a slurry and then sintering it under a protection of inert gas atmosphere, thereby obtaining lithium manganese phosphate doped with element A and element R wherein the lithium manganese phosphate doped with element A and element R is Li₁₊ₓMn_{1-y}A_{y}P_{1-z}R_{z}O₄, in which x is in the range of -0.100 to 0.100, optionally in the range of -0.100 to 0.006, y is in the range of 0.001 to 0.500, optionally in the range of 0.100 to 0.450, z is in the range of 0.001 to 0.100, said A comprises one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co and Mg, and said R comprises one or more elements selected from B, Si, N and S.

In any embodiment of the present application, said step (1) is carried out at a temperature in the range of 20-120°C, optionally in the range of 25-80°C.

In any embodiment of the present application, stirring in said step (1) is carried out at a stirring rate of 500-700 rpm for 60-420 minutes, optionally for 120-360 minutes.

Thus, by controlling the reaction temperature, stirring rate and mixing time during doping, it is allowed to enable doping elements to distribute uniformly and to achieve a higher crystallinity after the material is subjected to sintering, thereby improving gram capacity and rate performance of the positive electrode active material.

In any embodiment of the present application, said source of element A is one or more selected from an elemental substance, a sulfate, a halide, a nitrate, an organic acid salt, an oxide or a hydroxide of element A.

In any embodiment of the present application, said source of element R is one or more selected from an elemental substance, a sulfate, a halide, a nitrate, an organic acid salt, an oxide or a hydroxide of element A and an inorganic acid of element R.

By selecting source of each doping element within the above range, it is allowed to effectively improve performances of the positive electrode active material.

In any embodiment of the present application, said MP₂O₇ powder is prepared by: adding a source of element M and a source of phosphorus to a solvent to obtain a mixture, adjusting pH of the mixture to be from 4 to 6, stirring it and allowing it to react sufficiently, and then obtaining it by drying and sintering, wherein M is one ore more elements selected from Li, Fe, Ni, Mg, Co, Cu, Zn, Ti, Ag, Zr, Nb and Al.

In any embodiment of the present application, in the preparation process of the MP₂O₇ powder, said drying is carried out at 100°C to 300°C, optionally 150°C to 200°C for 4 hours to 8 hours.

In any embodiment of the present application, in the preparation process of the MP₂O₇ powder, said sintering is carried out under an inert gas atmosphere at 500°C to 800°C, optionally 650°C to 800°C for 4 hours to 10 hours.

In any embodiment of the present application, said sintering temperature for obtaining the positive electrode active material in the step of cladding is from 500°C to 800°C, and said sintering time for obtaining the positive electrode active material in the step of cladding is from 4 hours to 10 hours. By controlling the sintering temperature and time during cladding, it is allowed to further improve gram capacity and rate performance of the positive electrode active material.

A third aspect of the present application provides a positive electrode plate comprising a positive electrode current collector and a positive electrode film layer provided on at least one surface of the positive electrode current collector, wherein said positive electrode film layer comprises the positive electrode material composition of the first aspect of the present application or the positive electrode material composition prepared by the method of the second aspect of the present application, and said positive electrode material composition is present in said positive electrode film layer in a content of 50 wt% or more, based on total weight of said positive electrode film layer.

In any embodiment of the present application, said positive electrode material composition is present in said positive electrode film layer in a content of 90 wt% to 100 wt%, based on total weight of said positive electrode film layer.

In any embodiment of the present application, the positive electrode film layer has a solid-liquid contact angle with a non-aqueous organic solvent of between 3° and 90°, optionally of between 3° and 60°, and more optionally of between 10° and 30°. The contact angle in a suitable range enables batteries to have a relatively high energy density, and to have an improved cycle performance, safety performance and/or rate performance.

In any embodiment of the present application, the positive electrode film layer has a porosity of 15% to 50%, and optionally of 15% to 30%. The porosity in a suitable range enables secondary batteries to have a relatively high energy density, and to have an improved cycle performance, safety performance and/or rate performance.

In any embodiment of the present application, said positive electrode film layer has a resistance of greater than 0 and less than or equal to 6 Ω. As a result, it is allowed for secondary batteries to obtain a better kinetic performance.

In any embodiment of the present application, a bonding force between said positive electrode film layer and said positive electrode current collector is greater than or equal to 0.5 MPa, thereby facilitating the exertion of performances of secondary batteries.

In any embodiment of the present application, said positive electrode film layer has an areal density of from 0.006 g/cm² to 0.065 g/cm², thereby facilitating the enhancement of volumetric energy density of secondary batteries.

In any embodiment of the present application, said positive electrode film layer has a wicking rate of 0.0125 µg/s to 100 µg/s, optionally of 0.5 µg/s to 40 µg/s to an electrolytic solution, thereby facilitating the improvement of electrochemical performance of the secondary battery.

When the positive electrode plate of the present application is used in a secondary battery, it is allowed to improve energy density, cycle performance, safety performance, and/or rate performance of the secondary battery.

A fourth aspect of the present application provides a secondary battery comprising the positive electrode material composition of the first aspect of the present application, or the positive electrode material composition prepared by the method of the second aspect of the present application, or the positive electrode plate of the third aspect of the present application.

A fifth aspect of the present application provides an electrical device comprising the secondary battery of the fourth aspect of the present application.

The positive electrode plate, the secondary battery, and the electrical device of the present application include the positive electrode material composition of the present application, and thus have at least the same advantages as said positive electrode material composition.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person skilled in the art can obtain other drawings based on the accompanying drawings without creative work.
FIG. 1 is a schematic diagram of a secondary battery according to an embodiment of the present application.
FIG. 2 is an exploded view of a secondary battery according to the embodiment of the present application as shown in FIG. 1.
FIG. 3 is a schematic diagram of a battery module according to an embodiment of the present application.
FIG. 4 is a schematic diagram of a battery pack according to an embodiment of the present application.
FIG. 5 is an exploded view of the battery pack according to the embodiment of the present application as shown in FIG. 4.
FIG. 6 is a schematic diagram of an electrical device according to an embodiment of the present application using the secondary battery of the present application as power source.
FIG. 7 illustrates a comparison of an XRD spectrum of the core of the positive active materials prepared in Example 1-1 with the XRD standard spectrum (00-033-0804) of lithium manganese phosphate.

In the drawings, the accompanying drawings are not necessarily drawn to an actual scale. Among them, the reference sings in the accompanying drawings are illustrated as follows: 1 - battery pack, 2 - upper case, 3 - lower case, 4 - battery module, 5 - secondary battery, 51 - housing, 52 - electrode assembly, and 53- cover plate.

### DETAILED DESCRIPTION

Hereinafter, embodiments of the positive electrode material composition, the method for the preparation thereof, the positive electrode plate, the secondary battery, and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

For the purposes herein, the term "median particle size Dv50" is a particle size at which a cumulative volume distribution percentage of a material reaches to 50%. In the present application, the median particle size Dv50 of a material may be determined using a laser diffraction particle size analysis. For example, with reference to standard GB/T 19077-2016, it is determined using a laser particle size analyzer (e.g., Malvern Master Size 3000).

As used herein, substituents of compounds are disclosed as groups or ranges. It is explicitly expected that such a description includes each individual subcombination of members of these groups and ranges. For example, the term "C1-C8 alkyl group" is explicitly expected to disclose C1, C2, C3, C4, C5, C6, C7, C8, C1-C8, C1-C7, C1-C6, C1-C5, C1-C4, C1-C3, C1-C2, C2-C8, C2-C7, C2-C6, C2-C5, C2-C4, C1-C3, C1-C2, C2-C8, C2-C7, C2-C6, C2-C5, C2-C4, C2-C4, C2-C4, C2-. C3, C3-C8, C3-C7, C3-C6, C3-C5, C3-C4, C4-C8, C4-C7, C4-C6, C4-C5, C5-C8, C5-C7, C5-C6, C6-C8, C6-C7, C5-C6, C6-C8, C6-C7, and C7-C8 alkyl groups.

As used herein, the term "aliphatic hydrocarbyl group" comprises alkyl, alkenyl, and alkynyl groups. The term "heteroaliphatic hydrocarbyl group" means an aliphatic hydrocarbyl group containing heteroatoms (e.g., N, O, S, etc.). The term "heteroalkyl group" means an alkyl group containing heteroatoms (e.g., N, O, S, etc.), such as alkoxy group, alkothio group, etc.

As used herein, the term "cladding layer" refers to a layer of material over a core, and said layer of material may completely or partially cover the core. Use of the term "cladding layer" is used only for convenience of description and is not intended to limit the present invention. Alternatively, each cladding layer may be fully or partially cover the core.

As used herein, the term "source" refers to a compound that is a source of an element. As examples, the types of said "source" include, but are not limited to, carbonate salts, sulfate salts, nitrate salts, elemental substances, halides, oxides, hydroxides, and the like.

As used herein, the terms "a plurality of ", and "more" mean two or more.

As used herein, an "approximate" value indicates a range of that the specified value ± 10%.

The inventors of the present application found in an actual operation that leaching out of manganese ions is serious during deep charging and discharging of a lithium manganese phosphate (LiMnP04) positive electrode active material. Although the prior art has attempted to coat the lithium manganese phosphate with lithium iron phosphate to reduce interfacial side reactions, such a coating cannot prevent the leached-out manganese ions from migrating into an electrolyte. The leached-out manganese ions are reduced to metal manganese after migration to a negative electrode. The produced metal manganese is equivalent to a "catalyst", which can catalyze decomposition of SEI (solid electrolyte interphase) film on the surface of the negative electrode to produce a by-product. Some by-products are gas, which is prone to cause the battery to expand and affect safety performance of the battery, and others are deposited on the surface of the negative electrode to block channels of lithium ions in and out of the negative electrode, resulting in an increased impedance of the battery and negatively affecting dynamic performance of the battery. In addition, in order to supplement the decomposed SEI film, the electrolyte and active lithium ions in the battery are continuously consumed, which also has an irreversible impact on capacity retention rate of the battery.

The inventors have found, after extensive research, that for a lithium manganese phosphate positive electrode active material, the problems such as serious leaching out of manganese ions and high surface reactivity may be caused by the ginger-Taylor effect of Mn³⁺ and a change size of Li⁺ channel size after deintercalation of lithium. For this reason, the inventors modified lithium manganese phosphate, thereby obtaining a positive electrode active material capable of significantly reducing leaching out of manganese ions and reducing lattice change rate, and thus possessing good cycle performance, safety performance, and/or rate performance. Meanwhile, the inventors of the present application have found that the combination of the positive electrode active material with an organopolysiloxane compound can alleviate erosion of the surface of the positive electrode active material caused by an electrolyte, thereby facilitating fully exertion of electrochemical performances of the positive electrode active material.

### Positive electrode material composition

Specifically, a first aspect of the present application provides a positive electrode material composition comprising a positive electrode active material with a core-shell structure and an organopolysiloxane compound.

The positive electrode active material comprises an core and a shell covering said core; the core comprises Li₁₊ₓMn_{1-y}A_{y}P_{1-z}R_{z}O₄, in which x is in the range of -0.100 to 0.100, y is in the range of 0.001 to 0.500, z is in the range of 0.001 to 0.100, said A comprises one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co and Mg, said R comprises one or more elements selected from B, Si, N and S; the shell comprises a first cladding layer covering said core and a second cladding layer covering said first cladding layer, said first cladding layer comprises pyrophosphate MP₂O₇ and phosphate XPO₄, in which M and X each independently comprises one or more elements selected from Li, Fe, Ni, Mg, Co, Cu, Zn, Ti, Ag, Zr, Nb, and Al, and said second cladding layer comprises carbon.

Unless otherwise stated, in the above chemical formula, when A represents more than two elements, the above range for the y value is not only for the stoichiometric number of each element as A, but also for the sum of the stoichiometric numbers of each element as A. For example, when A represents more than two elements A1, A2 ...... and An, each of the respective stoichiometric numbers y1, y2 ......and yn of respective A1, A2 ......and An must fall within the numerical range defined by the present application for y, and the sum of y1, y2...... and yn must also fall within such numerical range of the present application. Similarly, in the case where R are more than two elements, the limitations on numerical ranges for the stoichiometric numbers of R in the present application also have the above meaning.

The positive electrode active material of lithium manganese phosphate of the present application has a core-shell structure with a bilayer cladding layer, in which the core comprises Li₁₊ₓMn_{1-y}A_{y}P_{1-z}R_{z}O₄. Said core is doped with element A at the manganese site of lithium manganese phosphate to help reduce the rate of change of crystal lattice of lithium manganese phosphate in the process of intercalcating-deintercalcating of lithium, improve structural stability of the positive electrode active material of lithium manganese phosphate, greatly reduce leaching out of manganese ions and reduce oxygen activity on the surface of particles. The element R doped at the phosphorus site helps to change the difficulty of the Mn-0 bond length change, thereby reducing migration barrier of lithium ions, promoting migration of lithium ions, and improving rate performance of secondary batteries.

The first cladding layer of the positive electrode active material of the present application includes pyrophosphate salts and phosphate salts. Due to the high migration barrier of transition metal in the pyrophosphate salts (>1 eV), the leaching out of transition metal ions can be effectively inhibited. And the phosphate salts have excellent ability to conduct lithium ions and can reduce the content of lithium impurities on the surface.

The second cladding layer of the positive electrode active material of the present application is a carbon-containing layer, which can effectively improve conductivity and desolvation ability of LiMnPO₄. In addition, the "barrier" effect of the second cladding layer can further hinder migration of manganese ions into an electrolyte and reduce erosion of the electrolyte on the positive electrode active material.

Therefore, by doping with specific elements and surface cladding of lithium manganese phosphate in the present application can effectively inhibit the leaching out of manganese ions in the process of intercalation and deintercalation of lithium and promote migration of lithium ions, thereby improving cycle performance, safety performance, and/or rate performance of secondary batteries.

The positive electrode material composition of the present application comprises a positive electrode active material and an organopolysiloxane compound. The inventors of the present application found that the combination of the positive electrode active material with the organopolysilane compound can alleviate erosion of the surface of the positive electrode active material caused by an electrolytic solution, and reduce leaching out of Mn ions, so as to improve electrochemical performance of the positive electrode active material. The possible reason is that Si-O skeleton of the organopolysiloxane compound can remove F ions from an electrolyte, thereby reducing acidity of an electrolyte and alleviating erosion of the surface of the positive electrode active material caused by acidic substances in the electrolyte. The organopolysiloxane compound further has a certain hydrophobicity, and can be used to prepare a positive electrode plate with positive electrode active material. The prepared positive electrode plate has an increased contact angle with an electrolyte, so that erosion of the surface of the positive electrode active material caused by the electrolyte is alleviated.

As a result, an electrical device such as a positive electrode plate and secondary battery adopting the positive electrode material composition of the present application can have higher energy density, and also have a relatively high energy density, while further improving cycle performance, safety and/or rate performance.

It should be noted that the core of the positive electrode active material of the present application has basically same primary characteristic peaks at position to undoped LiMnPO₄, indicating that the core of the doped lithium manganese phosphate positive electrode active material of the present application has no impurity phase and the improvement of battery performances is mainly caused by doping of elements rather than by an impurity phase.

In some embodiments, optionally, said first cladding layer is applied in an amount of greater than 0 wt% and less than or equal to 7 wt%, optionally from 4 wt% to 5.6 wt%, based on the weight of said core. When the applied amount of said first cladding layer is within the above range, it is allowed to further inhibit leaching out of manganese ions while further promoting transmission of lithium ions. And the following situations can be effectively avoided: if the applied amount of the first cladding layer is too low the leaching out of manganese ions cannot be inhibited sufficiently by pyrophosphate, and at the same time, the transmission performance of lithium ions cannot be improved significantly; if the applied amount of the first cladding layer is too high, it may lead to an excessively thick cladding layer, which will increase impedance of batteries, and affect kinetic performance of secondary batteries.

In some embodiments, optionally, the applied amount of said second cladding layer is greater than 0 wt% and less than or equal to 6 wt%, optionally from 3 wt% to 5 wt%, based on the weight of said core. A carbon-containing layer as the second cladding layer can, on the one hand, exert its function of a "barrier" to avoid direct contact between the positive electrode active material and an electrolyte, thereby reducing erosion of the electrolyte on the positive electrode active material, and improving safety performance of secondary batteries at high temperatures. On the other hand, it has a strong conductive ability and can reduce internal resistance of batteries, thus improving kinetic performance of secondary batteries. However, since carbon materials have a low gram capacity, when the second cladding layer containing the same is used in an excessive amount, the overall gram capacity of the positive electrode active material may be reduced. Therefore, when the applied amount of the second cladding layer is within the above range, it is possible to further improve kinetic performance and safety performance of the secondary battery without sacrificing gram capacity of the positive electrode active material.

In the core, x is from -0.100 to 0.100, for example, x may be 0.006, 0.004, 0.003, 0.002, 0.001, 0, -0.001, - 0.003, -0.004, -0.005, -0.006, -0.007, -0.008, -0.009, or -0. 100. Optionally, x is from -0.100 to 0.006.

In said core, y is from 0.001 to 0.500. For example, y may be 0.100, 0.200, 0.250, 0.300, 0.350, 0.400, or 0.450. Optionally, y is from 0.100 to 0.450.

In said core, z is from 0.001 to 0.100. For example, z may be 0.001, 0.002, 0.003, 0.004, 0.005, 0.006, 0.007, 0.008, 0.009, or 0.100.

Optionally, in some embodiments, a ratio of y to 1-y in said core is from 1:10 to 10:1, optionally from 1:4 to 1:1. Herein y denotes the sum of stoichiometric numbers of doping elements at the site of Mn. The energy density and cycle performance of secondary batteries may be further improved in the event that the above conditions are satisfied.

Optionally, in some embodiments, in said core, a ratio of z to 1-z is from 1:9 to 1:999, optionally from 1:499 to 1:249. Herein z denotes the sum of stoichiometric numbers of doping elements at the site of P. The energy density and cycle performance of secondary batteries may be further improved in the event that the above conditions are satisfied.

In some embodiments, optionally, said A is at least two elements selected from Fe, Ti, V, Ni, Co, and Mg.

Simultaneous doping of more than two of the above elements at the site of manganese in a positive electrode active material of lithium manganese phosphate is conducive to enhancing doping effect, which on the one hand further reduces the rate of change of crystal lattice so as to inhibit leaching out of manganese ions and reduce consumption of an electrolyte and active lithium ions, and on the other hand, is also conducive to further reducing the surface oxygen activity and reducing interfacial side reactions between the positive electrode active material and an electrolyte, so as to improve cycle performance and high temperature storage performance of secondary batteries.

In some embodiments, optionally, said first cladding layer contains phosphate salts having a crystal plane spacing of 0.345 nm to 0.358 nm, and a crystal orientation (111) angle of 24.25° to 26.45°.

Optionally, in some embodiments, said first cladding layer contain pyrophosphate salts having a crystal plane spacing of 0.293 nm to 0.326 nm, and a crystal orientation (111) angle of from 26.41° to 32.57°.

When the crystal plane spacing and the crystal orientation (111) angle of phosphate salts and pyrophosphate salts in the first cladding layer are in the above ranges, impurity phase(s) in the cladding layer can be effectively avoided, so as to enhance gram capacity, cycle performance, and rate performance of the positive electrode active material.

In some embodiments, optionally, a weight ratio of the pyrophosphate salts and the phosphate salts in said first cladding layer is from 1:3 to 3:1, optionally 1:3 to 1:1. The suitable ratio of the pyrophosphate salts and the phosphate salts is conducive to exerting their synergistic effect, which can effectively impede leaching out of manganese ions, and also effectively reduce content of impurity lithium on the surface and reduce interfacial side reactions. And the following situations can be effectively avoided: if the amount of pyrophosphate salts is too high and of phosphate salts is too low, it may lead to an increase in battery impedance; if the amount of phosphate salts is too high and of pyrophosphate salts is too low, the effect of inhibiting manganese ion leaching out is not significant.

In some embodiments, optionally, the pyrophosphate salts and the phosphate salts in said first cladding layer each independently has a crystallinity of from 10% to 100%, optionally from 50% to 100%. In the first cladding layer of the positive electrode active material of lithium manganese phosphate of the present application, the pyrophosphate salts and phosphate salts having a certain degree of crystallinity are conducive to maintaining structural stability of the first cladding layer and reducing lattice defects. It is conducive to exert well the role of the pyrophosphate salts in hindering leaching out of manganese ions on the one hand, and on the other hand, it is also conducive to exert the role of the phosphate salts in reducing the amount of impurity lithium on the surface and lowering oxygen valence on the surface, so as to reduce interfacial side reactions between the positive electrode active material and an electrolyte, reduce consumption of an electrolyte, and improve cycle performance and safety performance of secondary batteries.

It is to be noted that in the present application, the crystallinity of the pyrophosphate salts and the phosphate salts can be altered, for example, by adjusting process conditions of a sintering process such as a sintering temperature, a sintering period, and the like. The crystallinity of the pyrophosphate salts and phosphate salts may be measured by methods known in the art, for example by methods such as X-ray diffraction, density methods, infrared spectroscopy, differential scanning calorimetry and nuclear magnetic resonance absorption.

In some embodiments, optionally, said positive electrode active material has a Li/Mn antisite defect concentration of 4% or less, optionally of 2% or less. The Li/Mn antisite defect refer to swapping of the Li⁺ and Mn²⁺ sites in a LiMnPCL lattice. The Li/Mn antisite defect concentration refers to a percentage of Li⁺ is swapped with Mn²⁺ relative to the total amount of Li⁺ in the positive electrode active material. Since a transport channel for Li⁺ is a one-dimensional channel and Mn²⁺ is difficult to migrate in the Li⁺ transport channel, the Mn²⁺ having the antisite defect will hinder Li⁺ transport. In the positive electrode active material of the present application, the gram capacity and rate performance of the positive electrode active material can be improved by controlling the Li/Mn antisite defect concentration at a low level. In the present application, the antisite defect concentration can be determined, for example, according to JIS K 0131-1996.

In some embodiments, optionally, said positive electrode active material has a lattice change rate of 8% or less, optionally of 6% or less, more optionally of 4% or less. A lithium intercalation-deintercalation process of LiMnP04 is a two-phase reaction. The interfacial stress between the two phases is determined by the lattice change rate, and the smaller the lattice change rate is, the smaller the interfacial stress is, and the easier the Li⁺ transport is. Thus, reducing lattice change rate of the core will facilitate to enhance Li⁺ transport, thereby improving rate performance of secondary batteries.

In some embodiments, optionally, said positive electrode active material has an average discharge voltage of 3.5 V or more and a discharge gram capacity of 140 mAh/g or more, optionally, an average discharge voltage of 3.6 V or more and a discharge gram capacity of 145 mAh/g or more, when used as a button cell. Although the undoped LiMnPO₄ has an average discharge voltage of above 4.0 V, it has a lower discharge gram capacity, usually less than 120 mAh/g, and thus the secondary battery adopting the same has a lower energy density. By adjusting the lattice change rate by doping can result in a substantial increase in terms of discharge gram capacity, and a significant increase in an overall energy density of secondary batteries in the presence of a slight decrease in terms of an average discharge voltage.

In some embodiments, optionally, said positive electrode active material has a surface oxygen valence of is -1.88 or less, optionally -1.98 to -1.88. This is due to the fact that the higher the valence state of oxygen in a compound, the stronger its ability to gain electrons is, i.e., the stronger its oxidizability is. In the lithium manganese phosphate positive electrode active material of the present application, by controlling the surface oxygen valence at a lower level, it is possible to reduce reaction activity on the surface of the positive electrode active material, and to reduce interfacial side reactions between the positive electrode active material and an electrolyte, thereby improving cycle performance and high temperature storage performance of secondary batteries.

In some embodiments, optionally, said positive electrode active material has a compaction density of 2.0 g/cm³ or more, optionally from 2.2 g/cm³ or more, at 3 tonnes (T). A higher compaction density of the positive electrode active material, i.e., a higher weight per unit volume of the active material, will be more conducive to improving volumetric energy density of secondary batteries. In the present application, the compaction density may, for example, be determined according to GB/T 24533-2009.

In some embodiments, said organopolysiloxane compound comprises at least one structural unit shown in Formula 1, 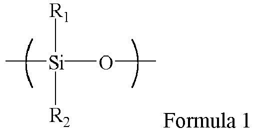 R₁ and R₂ each independently represent H or at least one functional group selected from the group consisting of: -COOH, -OH, -SH, -CN, -SCN, amino groups, phosphate groups, carboxylate groups, amide groups, aldehyde groups, sulfonyl groups, polyether chain segments, C₁-C₂₀ aliphatic hydrocarbyl groups, C₁-C₂₀ halogenated aliphatic hydrocarbyl group, C₁-C₂₀ heteroaliphatic hydrocarbyl groups, C₁-C₂₀ halogenated heteroaliphatic hydrocarbyl groups, C₆-C₂₀ aromatic hydrocarbyl groups, C₆-C₂₀ halogenated aromatic hydrocarbyl groups, C₂-C₂₀ heteroaromatic hydrocarbyl groups, and C₂-C₂₀ halogenated heteroaromatic hydrocarbyl groups. Optionally, R₁ and R₂ each independently represent H or at least one functional group selected from the group consisting of: -COOH, -OH, -SH, amino groups, phosphate groups, polyether chain segments, C₁-C₈ alkyl groups, C₁-C₈ haloalkyl groups, C₁-C₈ heteroalkyl groups, C₁-C₈ haloheteroalkyl groups, C₂-C₈ alkenyl groups, C₂-C₈ haloalkenyl groups, and phenyl. More optionally, R₁ and R₂ each independently represent H or at least one functional group selected from the group consisting of: -OH, -SH, amino groups, phosphate groups, polyether chain segments, C₁-C₈ alkyl groups, C₁-C₈ haloalkyl groups, C₁-C₈ heteroalkyl groups, C₁-C₈ haloheteroalkyl groups, C₂-C₈ alkenyl groups, and C₂-C₈ haloalkenyl groups.

These functional groups can complexate manganese ions and/or react with acidic substances in an electrolyte, thereby leaching out of manganese ions, and further improving cycle performance and/or high-temperature stability of batteries.

When these functional groups further have an electron-withdrawing property, Si in the Si-O skeleton of the organopolysiloxane compound is more electron-deficient, thereby further enhancing its affinity with F-containing ions in an electrolyte, alleviating erosion of the surface of the positive electrode active material caused by acidic substances in an electrolyte and reducing leaching out of manganese ions, so as to significantly improve cycle performance and/or high-temperature stability of secondary batteries.

In some embodiments, the organopolysiloxane compound comprises one or more selected from of a linear polysiloxane, and a cyclic polysiloxane, optionally, the organopolysiloxane compound is selected from a linear polysiloxane.

As a result, erosion on the surface of the positive electrode active material caused by acidic substances in an electrolyte can be further alleviated, and leaching out of manganese ions can be reduced, so as to significantly improve cycle performance and storage performance of batteries. Due to delocalization of electrons in the ring of the cyclic polysiloxane, Si-O skeleton of the cyclic polysiloxane has a lower affinity to electron-rich F-containing ions than that of the linear polysiloxane, and thus its effect on the removal of F-containing ions in an electrolyte is slightly lower, its effect on the reduction of manganese ions leaching out is slightly weaker, and its effect on the improvement of cycle performance of secondary batteries is slightly worse.

In some embodiments of the present application, the linear polysiloxane further comprises a capping group. Optionally, the capping group comprises at least one functional groups selected from the group consisting of: polyether groups, C₁-C₈ alkyl groups, C₁-C₈ haloalkyl groups, C₁-C₈ heteroalkyl groups, C₁-C₈ haloheteroalkyl groups, C₂-C₈ alkenyl groups, C₂-C₈ haloalkenyl groups, C₆-C₂₀ aromatic hydrocarbyl groups, C₁-C₈ alkoxy groups, C₂-C₈ epoxy groups, hydroxyl groups, C₁-C₈ hydroxyalkyl groups, amino groups, C₁-C₈ aminoalkyl groups, carboxyl groups, and C₁-C₈ carboxyl alkyl groups.

In some embodiments, the cyclic polysiloxane has a molecular formula shown in Formula 2, wherein n represents a degree of polymerization of the structural unit shown in Formula 1. Optionally, *n*≤12, *n*≤11, *n*≤10, *n*≤9 or *n*≤8*.*

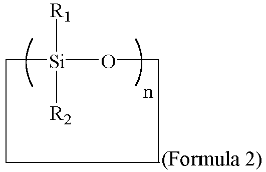

As an example, the linear polysiloxane comprises one or more of polydimethyl siloxane, polydiethyl siloxane, polymethyl ethyl siloxane, polymethyl vinyl siloxane, polyphenyl methyl siloxane, polymethyl hydrosiloxane, carboxyfunctionalized polysiloxane, polymethyl chloropropyl siloxane, polymethyl trifluoropropyl siloxane, perfluorooctyl methyl polysiloxane, mercaptopropyl polysiloxane, aminoethyl aminopropyl polydimethylsiloxane, methoxy terminated polydimethylsiloxane, hydroxypropyl terminated polydimethylsiloxane, aminopropyl terminated polydimethylsiloxane, epoxy end-capped polysiloxane, hydroxyl end-capped polydimethylsiloxane, polyether end-capped polydimethylsiloxane, pendent aminopropyl polysiloxane, pendent hydroxymethyl polysiloxane, pendent hydroxypropyl polysiloxane, pendent polyether-grafted polydimethylsiloxane, and pendent phosphate-grafted polydimethylsiloxane. Optionally, the linear polysiloxane comprises one or more of polydimethyl siloxane, polymethyl chloropropyl siloxane, polymethyl trifluoropropyl siloxane, mercaptopropyl polysiloxane, aminoethyl aminopropyl polydimethylsiloxane, hydroxyl end-capped polydimethylsiloxane, polyether end-capped polydimethylsiloxane, pendent phosphate-grafted polydimethylsiloxane.

As an example, the cyclic polysiloxane comprises one or more of cyclic polydimethylsiloxane, cyclic polymethyl vinyl siloxane, cyclic polymethyl hydrosiloxane, and cyclic polymethyl trifluoropropyl siloxane. Optionally, the cyclic polysiloxane comprises one or more of 1,3,5,7-octamethyl cyclotetrasiloxane, 1,3,5,7-tetrahydro-1,3,5,7-tetramethyl cyclotetrasiloxane, cyclopenta polydimethylsiloxane, 2,4,6,8-tetramethyl cyclotetrasiloxane, 2,4,6,8-tetramethyl-2,4,6,8-tetravinyl cyclotetrasiloxane, hexadecamethyl cyclooctasiloxane, and tetradecamethyl cycloheptasiloxane.

In some embodiments, the organopolysiloxane compound has a number average molecular weight of 300,000 or less, such as of 400 to 300,000, 400 to 200,000, 400 to 100,000, 400 to 80,000, 400 to 50,000, 400 to 20,000, 400 to 10,000, 1,000 to 100,000, 1,000 to 50,000, 1,000 to 20,000 or 1,000 to 10,000. The number average molecular weight of the organopolysiloxane compound may be determined by methods known in the art, such as by gel permeation chromatography (GPC). A PL-GPC 220 high temperature gel permeation chromatograph may be used for testing. In the present application, the organopolysiloxane compound may be either an oligomer or a polymer.

When the number average molecular weight of the organopolysiloxane compound is within the suitable ranges, it is possible to combine good dynamic performance and high-temperature stability of batteries. In addition, the following conditions may be effectively avoided: if the number average molecular weight of the organopolysiloxane compound is too small, it may result in a poor hydrophobicity of the organopolysiloxane compound, which may not effectively increase the contact angle between the positive film layer and an electrolyte, and then may not effectively alleviate erosion of on the surface of the positive electrode active material caused by an electrolytic solution, so that improvement of cycle performance and/or high-temperature stability of batteries is not considerable; and if the number average molecular weight of the organopolysiloxane compound is too high, it may result in a strong hydrophobicity of the organopolysiloxane compound, which may be not conducive to dispersion of its slurry, thus negatively affecting the improvement effect on the performance of batteries.

In some embodiments, a polar functional group is present in a mass percentage *α* in the organopolysiloxane compound, 0≤*α* < 50%, optionally, 5%≤*α*≤30%.

In the present application, the mass percentage of the polar functional group in the organopolysiloxane compound means a mass percentage of polar functional groups in R₁, R₂ and the capping groups in the organopolysiloxane compound. In the present application, the polar functional groups include one or more of -COOH, -OH, -SH, -CN, -SCN, amino groups (including -NH₂, and -NH-), phosphate groups, carboxylate groups (-COO-), amide groups (-CONH-), aldehyde groups (-CHO), sulfonyl groups (-S(=O)₂-), polyether chain segments, halogen atoms, alkoxy groups, and epoxy groups. When the polar functional group mentioned above are directly connected with silicon atoms, *α* represents a mass fraction of these polar functional groups in the organopolysiloxane compound. When the polar functional group mentioned above is not directly connected with silicon atoms, *α* represents the sum of the mass fractions of the polar functional groups and divalent to tetravalent methyl groups (e.g., -CH₂, -CH-, -C-, etc.) directly connected with the polar functional groups in the organopolysiloxane compound. As used herein, the divalent to tetravalent methyl groups represent carbon atoms that are directly connected with the polar functional groups and are located between the polar functional groups and the silicon atoms, and other non-polar functional groups connected with the carbon atoms. In the case of polymethyl trifluoropropyl siloxane, *α* refers to a mass percentage of -CF₃, excluding ethylene groups therein. In the case of polymethyl chloropropyl siloxane, *α* refers to a mass percentage of -CH₂Cl, excluding ethylene groups therein. In the case of hydroxypropyl terminated polydimethylsiloxane, *α* refers to a mass percentage of -CH₂OH. The mass percentage of the polar functional group in the organopolysiloxane compound may be determined by methods known in the art, such as by titration (e.g. acid-base titration, redox titration, and precipitation titration), infrared spectroscopy, and nuclear magnetic resonance spectroscopy.

When the organopolysiloxane compound has a mass percentage of polar functional group within the suitable ranges, it has a better effect on reducing acidity of an electrolyte and removing F ions in an electrolyte, thereby alleviating erosion of the surface of the positive electrode active material caused by acidic substances in an electrolyte well, and improving cycle performance and/or high-temperature stability of secondary batteries well. In addition, the following conditions may be effectively avoided: if the content of the polar functional groups in the organopolysiloxane compound is too high, its effect on reducing acidity of an electrolyte and removing F ions in an electrolyte may not be further improved, but a smaller contact angle between the positive electrode film layer and an electrolyte may be obtained, so that improvement of cycle performance of secondary batteries is not considerable.

In some embodiments, the organopolysiloxane compound is present in an amount of 0.01 wt% to 2 wt%, optionally 0.1 wt% to 2 wt%, based on the total weight of the positive electrode material composition. When the amount of the organopolysiloxane compound is within the suitable ranges, it has a better effect on reducing acidity of an electrolyte and removing F ions in anelectrolyte, thereby better alleviating erosion of the surface of the positive electrode active material caused by acidic substances in an electrolyte, and better improving cycle performance and/or high-temperature stability of secondary battery. In addition, the following conditions may be effectively avoided: if the amount of the organopolysiloxane compound is too high, it is possible to affect electrolyte infiltration to the positive electrode film layer and kinetic performance of secondary batteries, and at the same time, energy density of secondary batteries may be reduced since the organopolysiloxane compound cannot provide a capacity; if the amount of the organopolysiloxane compound is too low, its effect on reducing acidity of an electrolyte and removing F ions in an electrolyte is not considerable, and erosion of the surface of the positive electrode active material caused by acidic substances in an electrolyte cannot be effectively alleviated, so that improvement of cycle performance and/or high-temperature stability of secondary batteries is not considerable.

In some embodiments, the positive electrode material composition further comprises a binder. The binder may be a substance known in the art to have a bonding effect. Optionally, the binder comprises at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin. Optionally, the binder is present in an amount of 1.79 wt% to 10 wt%, and optionally 2 wt% to 5 wt%, based on the total weight of the positive electrode material composition.

In some embodiments, the positive electrode material composition further comprises a conductive agent. The conductive agent may be a substance known in the art to have an electron conduction effect. Optionally, the positive conductive agent comprises at least one of superconducting carbon, conductive graphite, acetylene black, carbon black, Ketjen black, carbon dots, carbon nanotubes, graphene, and carbon nanofibers. Optionally, the conductive agent is present in an amount of 0.2 wt% to 10 wt%, and optionally 0.5 wt% to 5 wt%, based on the total weight of the positive electrode material composition.

In some embodiments, the positive electrode material composition has a powder resistivity of 4 Ω/cm to 55 Ω/cm, optionally from 4 Ω/cm to 50 Ω/cm at 12MPa. The powder resistivity of the positive electrode material composition in a suitable range enables secondary batteries to have a better kinetic performance. The powder resistivity of the positive electrode material composition may be determined by a method known in the art. For example, according to GB/T 30835-2014, the powder resistivity tester can be used for testing. An exemplary test method includes steps of taking a certain amount of powder as a sample to be tested and packing it in a special mold, setting different pressure, and obtaining the powder resistivity at different pressures. In the present application, the pressure can be set to 12 Mpa. The testing instrument can be Suzhou lattice ST2722-SZ type four probe powder resistivity tester.

In some embodiments, the positive electrode material composition has a specific surface area of 8 m²/g to 20 m²/g, optionally 8 m²/g to 15 m²/g. The specific surface area of the positive electrode material composition in a suitable range can reduce interfacial side reactions between the positive electrode plate adopting the composition and an electrolyte, and reduce volumric expansion of secondary batteries, thereby enabling the secondary batteries to have a better electrochemical performance. The specific surface area of the positive electrode material composition can be determined by a method known in the art. For example, with reference to GB/T 19587-2017, the nitrogen adsorption specific surface area analysis test method can be used for testing, and the BET (BrunauerEmmett Teller) method can be use for calculating. Nitrogen adsorption specific surface area analysis test can be carried out by Micromeritics Tri-Star 3020 specific surface area aperture analysis tester.

### Preparation method

A second aspect of the present application provides a method for preparing the positive electrode material composition according to the first aspect of the present application, comprising a step of providing an core material, a step of cladding and a step of mixing.

In the step of providing an core material, said core comprises Li₁₊ₓMn_{1-y}A_{y}P_{1-z}R_{z}O₄, wherein x is in the range of -0.100 to 0.100, optionally in the range of -0.100 to 0.006, y is in the range of 0.001 to 0.500, optionally in the range of 0.100 to 0.450, z is in the range of 0.001 to 0.100, said A comprises one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co and Mg, and said R comprises one or more elements selected from B, Si, N and S.

The step of cladding comprises providing an MP₂O₇ powder and an XPO₄ suspension comprising a carbon source, adding said core material, and MP₂O₇ powder to the XPO₄ suspension comprising a carbon source and mixing them followed by sintering, thereby obtaining a positive electrode active material, wherein said M and X each are independently one or more elements selected from Li, Fe, Ni, Mg, Co, Cu, Zn, Ti, Ag, Zr, Nb and Al, and the resulting positive electrode active material has a core-shell structure comprising said core and a shell covering said core, said shell comprises a first cladding layer covering said core and a second cladding layer covering said first cladding layer, said first cladding layer comprising pyrophosphate salts MP₂O₇ and phosphate salts XPO₄, and said second cladding layer comprising carbon.

The step of mixing comprise mixing the resulting positive electrode active material with an organopolysiloxane compound, an optional binder and an optional conductive agent homogeneously to obtain a positive electrode material composition.

There is no particular limitation to the source of materials in the method of preparation of the present application. Optionally, materials for the inner core in the preparation method of the present application may be commercially obtained or may be prepared by the method of the present application. Optionally, said materials for the core are prepared by the methods described below.

In some embodiments of the present application, optionally the step for providing an core material comprises the following steps: Step (1), dissolving a manganese source, a source of element A and an acid in a solvent with stirring to obtain particles of a manganese salt doped with element A; Step (2), mixing the resulting particles of a manganese salt doped with element A with a lithium source, a phosphorus source, and a source of element R in a solvent with stirring to obtain a slurry and then sintering it under a protection of inert gas atmosphere, thereby obtaining lithium manganese phosphate doped with element A and element R wherein the lithium manganese phosphate doped with element A and element R is Li₁₊ₓMn_{1-y}A_{y}P_{1-z}R_{z}O₄, in which x is in the range of -0.100 to 0.100, optionally in the range of -0.100 to 0.006, y is in the range of 0.001 to 0.500, optionally in the range of 0.100 to 0.450, z is in the range of 0.001 to 0.100, said A comprises one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co and Mg, and said R comprises one or more elements selected from B, Si, N and S.

In some embodiments of the present application, optionally, said step (1) is carried out at a temperature in the range of 20-120°C, optionally in the range of 25-80°C.

In some embodiments of the present application, optionally, stirring in said step (1) is carried out at a stirring rate of 500-700 rpm for 60-420 minutes, optionally for 120-360 minutes.

By controlling the reaction temperature, stirring rate and mixing time during doping, it is possible to enable doping elements to distribute uniformly, to reduce lattice defects, to inhibit leaching out of manganese ions and to reduce interfacial side reactions between the positive electrode active material and an electrolyte, thereby improving gram capacity and rate performance of the positive electrode active material.

It is to be noted that in the present application, a source of an element may comprise one or more of an elemental substance, a sulfate, a halide, a nitrate, an organic acid salt, an oxide, or a hydroxide of the element, with the proviso that such a source may fulfill the purpose of the method of preparation of the present application. By way of example, said source of element A is one or more selected from an elemental substance, a sulfate, a halide, a nitrate, an organic acid salt, an oxide, or a hydroxide of element A; and/or, said source of element R is one or more selected from an elemental substance, a sulfate, a halide, a nitrate, an organic acid salt, an oxide, or a hydroxide of element R, as well as an inorganic acid of element R.

In some embodiments, optionally, the source of manganese in the present application is one or more selected from elemental manganese, manganese dioxide, manganese phosphate, manganese oxalate, and manganese carbonate.

In some embodiments, optionally, the element A is iron, and optionally, the source of iron is one or more selected from ferrous carbonate, ferric hydroxide, and ferrous sulfate.

In some embodiments, optionally, in step (1), said acid is one or more selected from hydrochloric acid, sulfuric acid, nitric acid, phosphoric acid, organic acids such as oxalic acid, and optionally oxalic acid. In some embodiments, said acid is a dilute acid with a concentration of 60 wt% or less.

In some embodiments, optionally, an inorganic acid containing element R is one or more selected from phosphoric acid, nitric acid, boric acid, silicic acid, proto silicic acid.

In some embodiments, optionally, the source of lithium in the present application is one or more selected from lithium carbonate, lithium hydroxide, lithium phosphate, and lithium dihydrogen phosphate.

In some embodiments, optionally, the source of phosphorus in the present application is one or more selected from diammonium hydrogen phosphate, ammonium dihydrogen phosphate, ammonium phosphate, and phosphoric acid.

In some embodiments, optionally, the source of carbon in the present application is an organic carbon source, and said organic carbon source is one or more selected from starch, sucrose, glucose, polyvinyl alcohol, polyethylene glycol, and citric acid.

In some embodiments, optionally, the solvent used in the preparation method described in the present application is a solvent commonly used in the art. For example, the solvents in the preparation methods of the present application may each be independently at least one selected from ethanol, and water (e.g., deionized water).

In some embodiments, optionally, the pH of solution is controlled to be from 4 to 6 in the preparation of the elemental A-doped manganese salt particles. It is noted that the pH of the resulting mixture may be adjusted in the present application by methods commonly used in the art, for example, by the addition of an acid or a base.

In some embodiments, optionally, in step (2), a molar ratio of said manganese salt particles doped with element A to the source of lithium, and to the source of phosphorus is 1:(0.5-2.1):(0.5-2.1).

In some embodiments, optionally, in step (2), the sintering is carried out at 600°C to 800°C for 4 hours to 10 hours under an inert gas or a mixed atmosphere of inert gas and hydrogen. As a result, the resulting sintered material has a higher crystallinity, so that gram capacity and rate performance of the positive electrode active material can be improved.

In some embodiments, optionally, a mixture of inert gas and hydrogen is a mixture of nitrogen (70 vol% to 90 vol%) + hydrogen (10 vol% to 30 vol%).

In some embodiments, optionally, said MP₂O₇ powder is a commercially available product, alternatively, optionally, said MP₂O₇ powder is prepared by: adding a source of element M and a source of phosphorus to a solvent, obtaining a mixture, adjusting pH of the mixture to be from 4 to 6, stirring it and reacting sufficiently, and then obtaining it by drying and sintering, wherein M is one or more selected from Li, Fe, Ni, Mg, Co, Cu , Zn, Ti, Ag, Zr, Nb, and Al.

In some embodiments, optionally, in the preparation of the MP₂O₇ powder, said drying step is carried out at 100°C to 300°C, optionally 150°C to 200°C for 4 hours to 8 hours.

In some embodiments, optionally, in the preparation of the MP₂O₇ powder, said sintering step is carried out under an inert gas atmosphere at 500°C to 800°C, optionally 650°C to 800°C for 4 hours to 10 hours.

In some embodiments, optionally, said XPO₄ suspension comprising a source of carbon is commercially available, alternatively, optionally, is prepared by mixing a source of lithium, a source of X, a source of phosphorus, and a source of carbon homogeneously in a solvent, and then warming up the reaction mixture to 60° C. to 120° C and keeping it at a temperature of from 2 hours to 8 hours, thereby obtaining the XPO₄ suspension comprising a source of carbon. Optionally, pH of said mixture is adjusted to be from 4 to 6 in the preparation of the XPO₄ suspension comprising a source of carbon.

In some embodiments, optionally, in the step of cladding, a mass ratio of said A-element and R-element doped lithium manganese phosphate (core), MP₂O₇ powder, and XPO₄ suspension comprising a source of carbon is 1:(0.001-0.05):(0.001-0.05).

In some embodiments, optionally, said sintering temperature for obtaining the positive electrode active material in the step of cladding is from 500°C to 800°C, and said sintering time for obtaining the positive electrode active material in the step of cladding is from 4 hours to 10 hours.

In some embodiments, optionally, the lithium manganese manganese phosphate positive electrode active material with a double-layer cladding layer of the present application has primary particles having a median particle size Dv50 of from 50 nm to 2000 nm.

### Positive electrode plate

A third aspect of the present application provides a positive electrode plate comprising a positive electrode current collector and a positive electrode film layer provided on at least one surface of the positive electrode current collector, wherein said positive electrode film layer comprises the positive electrode material composition of the first aspect of the present application or the positive electrode material composition prepared by the method of the second aspect of the present application, and said positive electrode material composition is present in said positive electrode film layer in a content of 50 wt% or more, based on the total weight of the positive electrode film layer. Said positive electrode current collector has two surfaces opposite to each other in the direction of its own thickness, and said positive electrode film layer is provided on either or both of two opposite surfaces of said positive electrode current collector.

In some embodiments, optionally, said positive electrode material composition is present in said positive electrode film layer in a content of 90-100 wt%, based on the total weight of said positive electrode film layer.

The positive electrode film layer does not exclude other ingredients than the positive electrode material composition of the first aspect of the present application or the positive electrode material composition prepared by the method of the second aspect of the present application. For example, the positive electrode film layer may further comprise other positive electrode active materials than the positive active materials of lithium manganese phosphate cladded with two layers in the present application, and optionally, such other positive electrode active materials may comprise at least one of a lithium transition metal oxide and a modified compound thereof. By way of example, said other positive electrode material compositions may include at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof.

In some embodiments, said positive electrode current collector may be a metal foil or a composite current collector. As an example of a metal foil, an aluminum foil may be used. The composite current collector may include a polymeric material matrix and a metallic material layer formed on at least one surface of the polymeric material matrix. As an example, the metallic material may be at least one selected from aluminum, aluminum alloy, nickel, nickel alloy, titanium, titanium alloy, silver, and silver alloy. As an example, the polymeric material matrix may be selected from polypropylene (PP), polyethylene terephthalate (PET), polybutylene terephthalate (PBT), polystyrene (PS), polyethylene (PE), etc.

In some embodiments, a solid-liquid contact angle between the positive electrode film layer and a non-aqueous organic solvent is between 3° and 90°, optionally between 3° and 60°, and more optionally between 10° and 30°. The contact angle in a suitable range enables batteries to have a relatively high energy density, while having improved cycle performance, safety performance and/or rate performance. In addition, the following conditions may be effectively avoided: if the contact angle is too small, it may not effectively alleviate erosion of the surface of the positive electrode active material caused by acidic substances in an electrolyte, so that improvement of cycle performance is not considerable; and if the contact angle is too large, it may result in a poor electrolyte infiltration of the positive electrode film layer, negatively affecting rate performance and cycle performance of batteries. The solid-liquid contact angle between the positive electrode film layer and a non-aqueous organic solvent has a meaning known in the art and can be determined by a method known in the art, e.g., by a method according to GBT 30693-2014. An exemplary test method comprises the following steps: dropping a drop of a non-aqueous organic solvent on the surface of the positive electrode plate at room temperature, and measuring its contact angle over a period of 60 seconds by a contact angle testing instrument. The testing instrument can be LSA 200 optical contact angle testing instrument of LAUDA Scientific Company in Germany. The non-aqueous organic solvent may be a non-aqueous organic solvent known in the art used for a non-aqueous electrolyte of a secondary battery, optionally, the non-aqueous organic solvent is ethylene carbonate (EC).

In some embodiments, the positive electrode film layer has a porosity of 15% to 50%, and optionally 15% to 30%. The porosity in a suitable range enables batteries to have a relatively high energy density, while further improving cycle performance, safety and/or rate performance. In addition, the following situations may be effectively avoided: if the porosity is too small, it may result in a poor electrolyte infiltration of the positive electrode film layer, affecting rate performance and cycle performance of secondary batteries; and if the porosity is too large, it may affect the overall energy density of secondary batteries. The porosity of the positive electrode film layer has a meaning known in the art and can be determined by a method known in the art. For example, the positive electrode film layer may be stripped by a tape and then determined by a method according to GB/T 24586-2009. Porosity P=[(V2-V1)/V2]×100% in which VI (cm³) represents a true volume and can be determined by displacement using an inert gas with a small molecular diameter, such as helium, in combination with Archimedes' principle and Bohr's law, and V2 (cm³) represents an apparent volume, V2=S×H×A. S (cm²) represents an area, H (cm) represents a thickness, and A represents the number of samples.

In some embodiments, said positive electrode film layer has a resistance greater than 0 and less than or equal to 6 Ω, which ensures that the positive electrode plate has a good electrical conductivity, so that a secondary battery containing the same has a better dynamic performance. The resistance of the positive electrode film layer has a meaning commonly known in the art, and it can be tested by methods known in the art, such as by using an electrode plate resistance meter. An exemplary test method is as follows: take a positive electrode plate that is coated on one side and cold-pressed (in the case of a positive electrode plate that is coated on both sides, the positive electrode film layer on one of the sides can be wiped off first) and place it in parallel between two conductive terminals of the electrode plate resistivity meter, and fix it by applying a certain amount of pressure, to obtain the resistance of the positive electrode film layer. Optionally, the conductive terminals can have a diameter of 14mm, the pressure applied can be 15Mpa to 27Mpa, and the time period for sampling can be from 10 seconds to 20 seconds. The testing instrument may be an IEST BER1000 electrode plate resistance meter from Yuanneng Technology Co.

In some embodiments, a bonding force between said positive electrode film layer and said positive electrode current collector is greater than or equal to 0.5 MPa. Within this range, it is possible to prevent the phenomenon of powder falling from the positive electrode plate from occurring, which is conducive to exerting performances of secondary batteries. The bonding force between the positive electrode film layer and the positive electrode current collector is known in the art in the sense that it can be tested by methods known in the art. An exemplary test method is as follows: cut the positive electrode plate into a test sample of 100 mm in length and 10 mm in width; take a piece of stainless steel plate of 25 mm in width to which double-sided adhesive tape (e.g., with a width of 11 mm) is affixed, paste the test sample to the double-sided adhesive tape on the stainless steel plate, and roll back and forth on the surface thereof three times with a 2,000 g pressure roller (e.g., with a roller pressure rate of 300 mm/min); bend the test sample at 180°, manually peel off the positive electrode film layer and positive electrode current collector of the test sample by 25 mm, fix the test sample on a testing machine (e.g., INSTRON 336), so that the peeling surface is consistent with the force line of the testing machine, and the testing machine is continuously peeled off at 30 mm/min to obtain a peeling force curve, and take an average value of the smooth sections as the peeling force F0. The bonding force between the positive electrode film layer and the positive electrode current collector = FO/width of the test sample.

In some embodiments, said positive electrode film layer has an areal density of 0.006 g/cm² to 0.065 g/cm², thereby facilitating enhancement of a volumetric energy density of secondary batteries. The areal density of the positive electrode film layer has a meaning commonly known in the art, and it can be tested using methods known in the art. An exemplary test method is as follows: take a positive electrode plate that is coated on one side and cold-pressed (in the case of a positive electrode plate that is coated on both sides, the positive electrode film layer on one of the sides can be wiped off first), punch and cut it into a small circle with an area of S1, weigh it, and record it as Ml; then wipe off the positive electrode film layer of the positive electrode plate after weighing as described above, weigh the weight of the positive electrode current collector, and record it as M0; and the areal density of the positive electrode film layer=(M1 - M0)/S1.

In some embodiments, said positive electrode film layer has a wicking rate of 0.0125 µg/s to 100 µg/s, optionally 0.5 µg/s to 40 µg/s, to an electrolytic solution. As a result, it is possible to ensure that an electrolyte has a good wettability in an electrode assembly, so as to enable it to quickly enter into the interior of the electrode assembly, and form a new SEI film on the surface of the positive electrode plate timely, thereby improving electrochemical performance of secondary batteries.

Said positive electrode film layer is usually made by applying a positive electrode slurry to the positive current collector followed by drying and cold pressing. Said positive electrode slurry is usually formed by dispersing the positive electrode active material, an optional conductive agent, an optional binder, and any other components in a solvent and stirring uniformly. The solvent may be N-methylpyrrolidone (NMP), but is not limited thereto.

It should be noted that, all parameters of positive electrode film layer (such as a contact angle, porosity, resistivity, binding force, areal density and wicking rate to an electrolyte etc.) given in the present application refer to parameters of the positive electrode film layer on one side of the positive electrode current collector. When the positive electrode film layers are arranged on both sides of the positive electrode current collector, it is considered to fall within the scope of protection of the present application that the parameters of the positive electrode film layer on either side of the collector meet the present application.

In addition, in the above tests for all parameter of the positive electrode film layer, the sample can be obtained during the preparation of the positive electrode plate or the battery, or from a prepared battery.

When the sample is obtained from the prepared battery, as an example, the sample can be obtained by the following steps: discharging the battery (generally keeping the battery in a fully discharged state for safety); disassembling the battery and then taking out the positive electrode plate, and soaking the positive electrode plate in dimethyl carbonate (DMC) for a certain period of time (for example, 2-10 hours); then taking out the positive electrode plate and performing a drying treatment at a certain temperature and time (for example, 60 ° C for 4 hours), taking out the positive electrode plate after the drying treatment, and at this point, obtaining the sample from the dried positive electrode plate for testing relevant parameters of the positive electrode film layer.

### Secondary Battery

A fourth aspect of the present application provides a secondary battery comprising the positive electrode plate of the third aspect of the present application.

A secondary battery, also known as a rechargeable battery or accumulator, is a battery that can continue to be used by activating its active material by means of charging after the battery has been discharged. Typically, a secondary battery includes an electrode assembly and an electrolyte, and the electrode assembly includes a positive electrode plate, a negative electrode plate, and a separator. The separator is disposed between the positive electrode plate and the negative electrode plate, which mainly functions as preventing short circuit of the positive and negative electrodes and at the same time allowing active ions to pass through. The electrolyte functions as conducting active ions between the positive electrode plate and the negative electrode plate.

### [Positive electrode plate]

A positive electrode plate used in the secondary battery of this application is the positive electrode plate described in any one of embodiments of the third aspect of this application.

### [Negative electrode plate]

In some embodiments, said negative electrode plate comprises a negative electrode current collector and a negative electrode film layer provided on at least one surface of said negative electrode current collector and comprising a negative electrode active material. For example, said negative electrode current collector has two surfaces opposite to each other in the direction of its own thickness, and said negative electrode film layer is provided on either or both of two opposite surfaces of said negative electrode current collector.

The negative electrode active material may be a negative electrode active material known in the art for use in secondary batteries. By way of example, said negative electrode active material includes, but is not limited to, at least one of natural graphite, artificial graphite, soft carbon, hard carbon, silicon-based material, tin-based material, and lithium titanate. Said silicon-based material may include at least one of elemental silicon, a silicon oxide, a silicon carbon composite, a silicon nitrogen composite, a silicon alloy material. Said tin-based materials may include at least one of elemental tin, a tin oxide, and a tin alloy material. The present application is not limited to these materials, and other conventionally known materials that can be used as negative electrode active materials for secondary batteries may also be used. These negative electrode active materials can be used alone, or in combination of two or more materials.

In some embodiments, said negative electrode film layer may also optionally comprise a negative electrode conductive agent. In the present application, the type of said negative electrode conductive agent is not particularly limited and, as an example, said negative conductive agent may include at least one of superconducting carbon, conductive graphite, acetylene black, carbon black, Ketjen black, carbon dots, carbon nanotubes, graphene, and carbon nanofibers.

In some embodiments, said negative electrode film layer may further optionally comprise a negative electrode binder. In the present application, the type of said negative electrode binder is not particularly limited and, as an example, said negative electrode binder may include at least one of styrene-butadiene rubber (SBR), water-soluble unsaturated resin SR-1B, aqueous acrylic resins (e.g., polyacrylic acid PAA, polymethacrylic acid PMAA, polyacrylic acid sodium salt PAAS), polyacrylamide (PAM), polyvinyl alcohol (PVA), sodium alginate (SA), and carboxymethyl chitosan (CMCS).

In some embodiments, said negative electrode film layer may optionally also include other additives. As an example, the other additives may include thickeners, e.g., sodium carboxymethyl cellulose (CMC), and PTC thermistor material, etc.

In some embodiments, said negative electrode current collector may be a metal foil or a composite collector. As an example of a metal foil, a copper foil may be used. The composite current collector may include a polymeric material matrix and a metallic material layer formed on at least one surface of the polymeric material matrix. As an example, the metallic material may be selected from at least one of copper, copper alloy, nickel, nickel alloy, titanium, titanium alloy, silver, and silver alloy. As an example, the polymer material matrix may be selected from polypropylene (PP), polyethylene terephthalate (PET), polybutylene terephthalate (PBT), polystyrene (PS), polyethylene (PE), etc.

Said negative electrode film layer is usually made by applying a negative electrode slurry to the negative electrode current collector followed by drying and cold pressing. Said negative electrode slurry is usually formed by dispersing the negative active material, an optional conductive agent, an optional binder, and any other optional additives in a solvent and stirring uniformly. The solvent may be N-methylpyrrolidone (NMP) and deionized water, but is not limited thereto.

Said negative electrode plate does not exclude other additional functional layers than said negative electrode film layer. For example, in some embodiments, the negative electrode plate described in the present application further comprises a conductive primer (e.g. being composed of a conductive agent and a binder) sandwiched between said negative electrode current collector and said negative electrode film layer and disposed on the surface of said negative electrode current collector. In some other embodiments, the negative electrode plate described in this application further comprises a protective layer covering the surface of said negative electrode film layer.

### [Electrolyte]

The type of electrolyte is not specifically restricted in the present application, and can be selected by those skilled in the art according to actual requirements. For example, the electrolyte may be at least one selected from solid electrolyte and liquid electrolyte (i.e., electrolytic solution).

In some embodiments, an electrolytic solution is used as the electrolyte. The electrolytic solution includes an electrolyte salt and a solvent.

The type of electrolyte salt is not specifically restricted in the present application, and can be selected by those skilled in the art according to actual requirements. In some embodiments, as an example, the electrolyte salt may comprise at least one of lithium hexafluorophosphate (LiPF*₆*), lithium tetrafluoroborate (LiBF₄), lithium perchlorate (LiClO₄), lithium hexafluoroarsenate (LiAsF₆), lithium bisfluorosulfonimide (LiFSI), lithium bis(trifluoromethane sulfonimide) (LiTFSI), lithium trifluoromethane sulfonate (LiTFS), lithium difluorooxalate borate (LiDFOB), lithium dioxalate borate (LiBOB), lithium difluorophosphate (LiPO₂F₂), lithium difluorodioxalate phosphate (LiDFOP) and lithium tetrafluorooxalate phosphate (LiTFOP).

The type of solvent is not specifically restricted in the present application, and can be selected by those skilled in the art according to actual requirements. In some embodiments, the solvent may comprise at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE).

In some embodiments, the electrolytic solution may also optionally include additives. For example, the additives may include negative electrode film-forming additives, and may include positive electrode film-forming additives, and yet may include additives that can improve certain performances of battery, for example, additives that improve battery overcharge performance, additives that improve high-temperature performance of battery, and additives that improve low-temperature performance of battery.

### [Separator]

In the secondary batteries using an electrolytic solution and some secondary batteries using a solid electrolyte, separators may be further included. The separators are arranged between the positive electrode plate and the negative electrode plate, and mainly function as preventing short circuit of the positive and negative electrodes while allowing active ions to pass through. There is no particular limitation on the type of separator in the present application, and any well-known porous-structure separator with good chemical stability and mechanical stability may be used.

In some embodiments, materials of the separator may be at least one of glass fibers, non-woven fabrics, polyethylene, polypropylene and polyvinylidene fluoride. The separator may be a single-layer film or a multi-layer composite film. When the separator is a multi-layer composite film, materials of each layer may be the same or different.

In some embodiments, said positive electrode plate, said separator, and said negative electrode plate may be made into an electrode assembly by a winding process or a stacking process.

In some embodiments, said secondary battery may include an outer package. The outer package may be used to encapsulate said electrode assembly and electrolyte.

In some embodiments, said outer package of said secondary battery may be a hard case, such as a hard plastic case, an aluminum case, a steel case, and the like. The outer package of the secondary battery may also be a soft package, such as a pouch-type soft package. Material of the soft bag can be plastic, such as at least one of polypropylene (PP), polybutylene terephthalate (PBT), and polybutylene succinate (PBS).

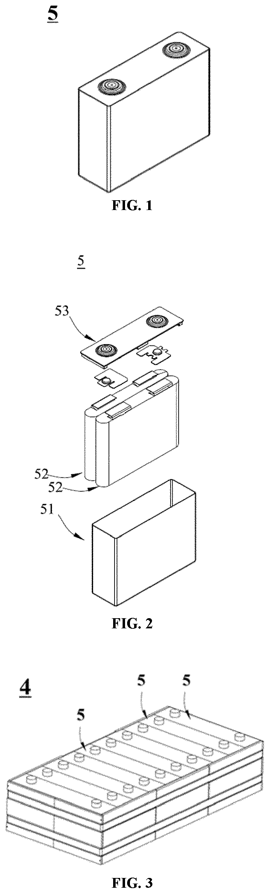

The shape of the secondary battery is not particularly limited in the present application, and it may be cylindrical, square, rectangular or any other shape. FIG. 1 is a schematic diagram of a secondary battery 5 of a rectangular structure as an example.

In some embodiments, as shown in FIG. 2, the outer package may include a casing 51 and a cover plate 53, wherein the casing 51 may include a bottom plate and side plates connected to the bottom plate, and the bottom plate and the side plates are enclosed to form an accommodating cavity. The casing 51 has an opening communicating with the accommodating cavity, and the cover plate 53 is used to cover the opening to close the accommodating cavity. A positive electrode plate, a separator, and a negative electrode plate may be made into an electrode assembly 52 by a winding process or a stacking process. The electrode assembly 52 is packaged in the accommodating cavity, and the electrolytic solution is infiltrated in the electrode assembly 52. The number of electrode assemblies 52 contained in the secondary battery 5 may be one or more, and may be adjusted according to requirements.

A process for preparing the secondary battery of the present application is well known in the art. In some embodiments, a positive electrode plate, a separator, a negative electrode plate and an electrolytic solution may be assembled into a secondary battery. As an example, a positive electrode plate, a separator, and a negative electrode plate can be made into an electrode assembly by a winding process or a stacking process, and the electrode assembly can be placed in an outer package and is subjected to drying, to which an electrolytic solution is injected. After vacuum encapsulation, resting, chemical formation, and shaping process, a secondary battery can be obtained.

In some embodiments of the present application, the secondary batteries according to the present application can be assembled into a battery module, and the number of secondary batteries contained in the battery module can be more than one, and the specific number can be adjusted according to application and capacity of the battery module.

FIG. 3 is a schematic diagram of the battery module 4 as an example. As shown in FIG. 3, in the battery module 4, a plurality of secondary batteries 5 may be arranged in sequence along the longitudinal direction of the battery module 4. Certainly, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

In some embodiments, the above-mentioned battery modules can also be assembled into a battery pack, and the number of battery modules included in the battery pack can be adjusted according to the application and capacity of the battery pack.

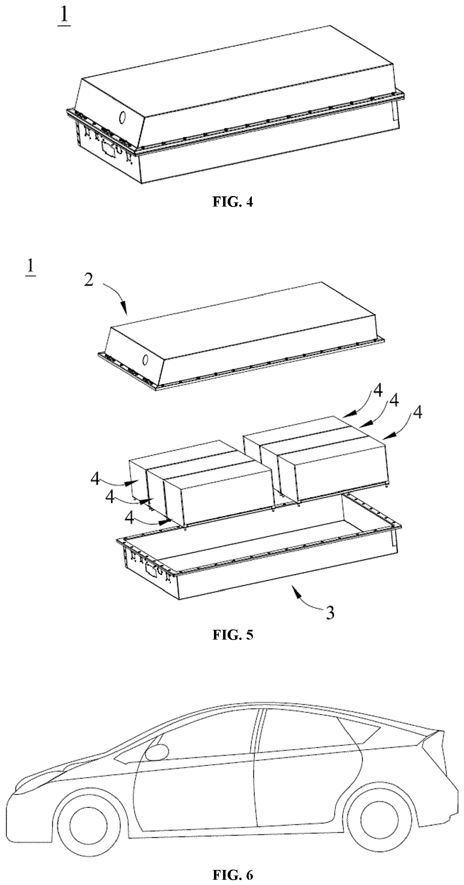

FIGS. 4 and 5 are schematic diagrams of the battery pack 1 as an example. As shown in FIGS. 4 and 5, the battery pack 1 may include a battery case and a plurality of battery modules 4 provided in the battery case. The battery box includes an upper case body 2 and a lower case body 3, and the upper case body 2 is used to cover the lower case body 3 to form a closed space for accommodating the battery modules 4. A plurality of battery modules 4 may be arranged in the battery case in any manner.

### Electrical device

A fifth aspect of the present application provides an electrical device comprising at least one of the secondary battery, battery module, and battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select a secondary battery, a battery module or a battery pack according to its usage requirements.

FIG. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electric device is generally required to be light and thin, and a secondary battery can be used as a power source.

### Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on mass, and all reagents used in the examples are commercially available or synthesized according to conventional methods and can be directly used without further treatment, and all instruments used in the examples are commercially available.

The sources of raw materials involved in examples of the present application are as follows:

| Name | Chemical Formula | Supplier | Specification |
|---|---|---|---|
| Manganese Carbonate | MnCO₃ | Shandong West Asia Chemical Industry Co. | 1Kg |
| Lithium Carbonate | Li₂CO₃ | Shandong West Asia Chemical Industry Co. | 1Kg |
| Magnesium carbonate | MgCO₃ | Shandong West Asia Chemical Industry Co. | 1Kg |
| Zinc Carbonate | ZnCO₃ | Wuhan Xinru Chemical Co. | 25Kg |
| Ferrous Carbonate | FeCO₃ | Xi'an Lanzhiguang Fine Material Co. | 1Kg |
| Nickel Sulfate | NiCO₃ | Shandong West Asia Chemical Industry Co. | 1Kg |
| Titanium Sulfate | Ti(SO₄)₂ | Shandong West Asia Chemical Industry Co. | 1Kg |
| Cobalt Sulfate | CoSO₄ | Xiamen Zhixin Chemical Co. | 500g |
| Vanadium Dichloride | VCl₂ | Shanghai Jin Jin Le Industry Co. | 1Kg |
| Oxalic acid dihydrate | C₂H₂O₄^{•}2H₂O | Shanghai Jin Jin Le Industry Co. | 1Kg |
| Ammonium dihydrogen phosphate | NH₄H₂PO₄ | Shanghai Chengshao Biotechnology Co. | 500g |
| Sucrose | C₁₂H₂₂O₁₁ | Shanghai Yuanye Biotechnology Co. | 100g |
| Sulfuric acid | H₂SO₄ | Shenzhen Haisian Biotechnology Co. | In a mass percentage of 60% |
| Nitric acid | HNO₃ | Anhui Lingtian Fine Chemical Co. | In a mass percentage of 60% |
| Silicic acid | H₂SiO₃ | Shanghai Yuanye Biotechnology Co. | 100g |
| Boric acid | H₃BO₃ | Changzhou Qidi Chemical Co. | 1Kg |

### Example 1-1

### Preparation of positive active materials

### 1) Preparation of co-doped lithium manganese phosphate core

Preparation of Fe, Co and V co-doped manganese oxalate: 689.5 g of manganese carbonate (as MnC03, hereinafter the same), 455.2 g of ferrous carbonate (as FeCO₃, hereinafter the same), 4.6 g of cobalt sulphate (as CoSO₄, hereinafter the same), and 4.9 g of vanadium dichloride (as VCl₂, hereinafter the same) were thoroughly mixed for 6 hr in a mixer. The mixture was transferred to a reactor to which 5 liters of deionized water and 1260.6 g of oxalic acid dihydrate (as C₂H₂O₄.2H₂O, hereinafter the same) were added. The reaction kettle was heated to 80 °C and the content was stirred at 600 rpm for 6 hours until the reaction was terminated (no bubbles were generated) to obtain a Fe, Co, V and S co-doped manganese oxalate suspension. Said suspension was then filtered and the filter cake was dried at 120°C, after which it was milled to obtain Fe, Co and V co-doped manganese oxalate dihydrate particles with a median particle size Dv50 of 100 nm.

Preparation of Fe, Co, V and S co-doped lithium manganese phosphate: the manganese oxalate dihydrate particles (1793.4 g) obtained in the previous step, 369.0 g of lithium carbonate (as Li₂CO₃, hereinafter the same), 1.6 g of diluted sulfuric acid (as 60% H₂SO₄, hereinafter the same) at a concentration of 60% and 1148.9 g of ammonium dihydrogen phosphate (as NH₄H₂PO₄, hereinafter the same) were added to 20 liters of deionized water, and the mixture was stirred for 10 hours to homogenize the mixture to obtain a slurry. Said slurry was transferred to a spray drying apparatus for spray drying and granulation with a drying temperature set at 250°C for for 4 hours to obtain powder. In a protective atmosphere of nitrogen (90 vol%) + hydrogen (10 vol%), the powder was sintered at 700°C for 4 hours to obtain 1572.1 g of Fe, Co, V and S co-doped lithium manganese phosphate, i.e., the inncer core.

### (2) Preparation of lithium iron pyrophosphate and lithium iron phosphate

Preparation of lithium iron pyrophosphate powder: 4.77 g of lithium carbonate, 7.47 g of ferrous carbonate, 14.84 g of ammonium dihydrogen phosphate and 1.3 g of oxalic acid dihydrate were dissolved in 50 mL of deionized water. The mixture had a pH of 5. The reaction mixture was allowed to fully react with stirring for 2 hours. The reacted solution was then warmed to 80 °C and maintained at that temperature for 4 h to obtain a suspension comprising Li₂FeP₂O₇. The suspension was filtered, and the resulting filter cake was washed with deionized water and dried at 120 °C for 4 h to obtain a powder. The said powder was sintered at 650°C under nitrogen atmosphere for 8 hours and subjected to milling after it was naturally cooled to room temperature, thereby obtaining Li₂FeP₂O₇ powder.

Preparation of lithium iron phosphate suspension: 11.1 g of lithium carbonate, 34.8 g of ferrous carbonate, 34.5 g of ammonium dihydrogen phosphate, 1.3 g of oxalic acid dihydrate, and 74.6 g of sucrose (as C₁₂H₂₂O₁₁, hereinafter the same) were dissolved in 150 mL of deionized water to obtain a mixture. The reaction mixture was allowed to fully react with stirring for 6 hours. The reacted solution was then warmed to 120 °C and maintained at that temperature for 6 h to obtain a suspension containing LiFePO₄.

### (3) Cladding

1572.1 g of the above Fe, Co, V and S co-doped lithium manganese phosphate (core) and 15.72 g of the above lithium iron pyrophosphate (Li₂FeP₂O₇) powder were added to the lithium iron phosphate (LiFePO₄) suspension prepared in the previous step, which was mixed well with stirring and then transferred to a vacuum oven to be dried for 6 hrs at 150 °C. The resulting product was then dispersed by sanding. After dispersion, the obtained product was sintered in a nitrogen atmosphere at 700°C for 6 hours to obtain the target product of lithium manganese phosphate cladded with two layers, i.e., the positive electrode active material.

### Preparation of positive electrode plate

The positive electrode active material, acetylene black as a conductive agent, polyvinylidene fluoride (PVDF) as a binder and aminoethylaminopropyl polydimethylsiloxane (with polar functional groups -CH₂NH₂ and - CH₂NH- in with a mass percentage α of about 12% and with a number average molecular weight of 3,700) were stirred in a mixer at a weight ratio of 93.4:1.5:4.5:0.6 until these materials were mixed homogeneously to obtain a positive electrode material composition. Then the above positive electrode material composition was added to N-methylpyrrolidone (NMP), stirred and mixed homogeneously to obtain a positive electrode slurry. The positive electrode slurry was then uniformly applied to an aluminum foil in a coating areal density of 0.018 g/cm², and then dried, cold pressed, and slit to obtain a positive electrode plate.

### Preparation of negative electrode plate

Artificial graphite as a negative active material, hard carbon, acetylene black as a conductive agent, styrene butadiene rubber (SBR) as a binder, sodium carboxymethyl cellulose (CMC) as a thickener at a weight ratio of 90:5:2:2:1 were dissolved in a solvent deionized water, which was stirred and mixed well to prepare a negative electrode slurry. The negative electrode slurry was uniformly applied to a copper foil as a current collector in a coating areal density of 0.00075 g/cm², and then dried, cold pressed, and slit to obtain a negative electrode plate.

### Preparation of electrolytic solution

In an argon atmosphere glove box (H₂O<0.1 ppm, O₂<0.1 ppm), as an organic solvent, ethylene carbonate (EC)/ethylmethylmethane carbonate (EMC) were mixed homogeneously at a volume ratio of 3/7, to which 12.5 wt% (based on the weight of the said organic solvent) of LiPF₆ was added so as to be dissolved therein, and the resulting mixture was stirred homogeneously, to obtain an electrolytic solution.

### Preparation of separator

A commercially available PP-PE copolymer microporous film with a thickness of 20 µm and an average pore size of 80 nm was used (from Trico Electronic Technology, model 20).

### Preparation of full battery

The positive electrode plate, separator and negative electrode plate were stacked in order, so that the separator was sandwiched between the positive and negative electrodes for isolation, and then they were wound to form an electrode assembly. The electrode assembly was placed in an outer package, filled with the above electrolytic solution, and encapsulated to obtain a full battery.

### Preparation of button battery

The positive electrode active material, acetylene black as a conductive agent, polyvinylidene difluoride (PVDF) as a binder, and aminoethyl aminopropyl polydimethylsiloxane (with polar functional groups -CH₂NH₂ and - CH₂NH- in a mass percentage *α* of 12%, and a number average molecular weight of 3700) at a weight ratio of 89.4:5:5:0.6 were stirred in a mixer until the materials were evenly mixed to obtain a positive electrode material composition. The positive electrode material composition was added to N-methylpyrrolidone (NMP) and stirred in a drying room to make a slurry. The above slurry was applied to an aluminum foil, dried and cold pressed to form a positive electrode plate. The coating areal density was 0.015g/cm² and the compaction density was 2.0g/cm³.

Lithium plate was used as a negative electrode, a 1 mol/L solution of LiPF₆ in a solvent of ethylene carbonate (EC), diethyl carbonate (DEC) and dimethyl carbonate (DMC) at a volume ratio of 1:1:1 was used as an electrolytic solution, and they were assembled together with the above prepared positive electrode plate in a button battery box to form a button battery (hereinafter also referred to as "button").

### Examples 1-2 to 1-33

Examples 1-2 to 1-33 were the same as Example 1-1 with the exception for the preparation of positive electrode active materials.

### Examples 1-2 to 1-6

Preparation of positive electrode active material: In the preparation of co-doped lithium manganese phosphate cores, the conditions for the preparation of lithium manganese phosphate cores in Examples 1-2 to 1-6 were the same as those in Example 1-1 with the exception that vanadium dichloride and cobalt sulfate were not used, and that 463.4 g of ferrous carbonate, 1.6 g of dilute sulfuric acid at a concentration of 60%, 1148.9 g of ammonium dihydrogen phosphate, and 369.0 g of lithium carbonate were used. In addition, in the preparation of lithium iron pyrophosphate and lithium iron phosphate and in the process of coating the first cladding layer and the second cladding layer, other conditions were the same as those in Example 1-1 except that the raw materials used were adjusted according to ratios of their applied amounts as shown in Table 1 to the applied amount corresponding to Examples 1-1, so that the amounts of Li₂FeP₂O₇/LiFePO₄ in Examples 1-2 to 1-6 were respectively 12.6 g/37.7 g, 15.7 g /47.1 g, 18.8 g/56.5 g, 22.0/66.0 g, and 25.1 g/75.4 g, and the amount of sucrose in Examples 1-2 to 1-6 was 37.3 g.

### Examples 1-7 to 1-10

Preparation of positive electrode active material: The conditions in Examples 1-7 to 1-10 were the same as those in Example 1-3 with the exception that the amount of sucrose was 74.6 g, 149.1 g, 186.4 g, and 223.7 g, respectively, so that the corresponding amounts of carbon layer as a second cladding layer were 31.4 g, 62.9 g, 78.6 g, and 94.3 g, respectively.

### Examples 1-11 to 1-14

Preparation of positive electrode active material: The conditions in Examples 1-11 to 1-14 were the same as those in Example 1-7 with the exception that in the preparation of lithium iron pyrophosphate and lithium iron phosphate, the amounts of various raw materials were adjusted according to the applied amounts shown in Table 1 so that the amounts of Li₂FeP₂O₇/LiFePO₄ were 23.6g/39.3g, 31.4g/31.4g, 39.3g/23.6g, and 47.2g/15.7g, respectively.

### Example 1-15

Preparation of positive electrode active material: The conditions in Example 1-15 was the same as those in Example 1-14 with the exception that in the preparation of co-doped lithium manganese phosphate core, 492.80 g of zinc carbonate was used instead of ferrous carbonate.

### Examples 1-16 to 1-18

Preparation of positive electrode active material: The conditions in Examples 1-16 to 1-18 were the same as those in Example 1-7 with the exception that in the preparation of co-doped lithium manganese phosphate core of Example 1-16, 466.4 g of nickel carbonate, 5.0 g of zinc carbonate, and 7.2 g of titanium sulfate were used instead of ferrous carbonate; in the preparation of co-doped lithium manganese manganese phosphate core of Example 1-17, 455.2 g of ferrous carbonate and 8.5 g of vanadium dichloride were used; and in the preparation of co-doped lithium manganese manganese phosphate core, 455.2 g of ferrous carbonate, 4.9 g of vanadium dichloride and 2.5 g of magnesium carbonate were used.

### Examples 1-19 to 1-20

Preparation of positive electrode active material: The conditions in Examples 1-19 to 1-20 were the same as those in Example 1-18 with the exception that in the preparation of co-doped lithium manganese phosphate core of Example 1-19, 369.4 g of lithium carbonate was used, and 1.05 g of dilute nitric acid at a concentration of 60% was used instead of dilute sulfuric acid; and in the preparation of co-doped lithium manganese phosphate core of Example 1-20, 369.7 g of lithium carbonate was used, and 0.78 g of silicic acid was instead of dilute sulfuric acid.

### Examples 1-21 to 1-22

Preparation of positive electrode active material: The conditions in Examples 1-21 to 1-22 were the same as those in Example 1-20 with the exception that in the preparation of co-doped lithium manganese phosphate core of Example 1-21, 632.0 g of manganese carbonate, 463.30 g of ferrous carbonate, 30.5 g of vanadium dichloride, 21.0 g of magnesium carbonate, and 0.78 g of silicic acid were used; and in the preparation of co-doped lithium manganese phosphate core of Example 1-22, 746.9 g of manganese carbonate, 289.6 g of ferrous carbonate, 60.9 g of vanadium dichloride, 42.1 g of magnesium carbonate, and 0.78 g of silicic acid were used.

### Examples 1-23 to 1-24

Preparation of positive electrode active material: The conditions in Examples 1-23 to 1-24 were the same as those in Example 1-22 with the exception that in the preparation of the co-doped lithium manganese phosphate core of Example 1-23, 804.6 g of manganese carbonate, 231.7 g of ferrous carbonate, 1156.2 g of ammonium dihydrogen phosphate, 1.2 g of boric acid (in a mass fraction of 99.5%), and 370.8 g of lithium carbonate were used; and in the preparation of the co-doped lithium manganese phosphate core of Example 1-24, 862.1 g of manganese carbonate, 173.8 g of ferrous carbonate, 1155.1 g of ammonium dihydrogen phosphate, 1.86 g of boric acid (in a mass fraction of 99.5%), and 371.6 g of lithium carbonate were used.

### Examples 1-25

Preparation of positive electrode active material: The conditions in Example 1-25 was the same as those in Example 1-20 with the exception that in the preparation of the co-doped lithium manganese phosphate core of Example 1-25, 370.1 g of lithium carbonate, 1.56 g of silicic acid and 1147.7 g of ammonium dihydrogen phosphate were used.

### Examples 1-26

Preparation of positive electrode active material: The conditions in Example 1-26 was the same as those in Example 1-20 with the exception that in the preparation of the co-doped lithium manganese phosphate core of Example 1-26, 368.3 g of lithium carbonate, 4.9 g of dilute sulfuric acid at 60% by mass, 919.6 g of manganese carbonate, 224.8 g of ferrous carbonate, 3.7 g of vanadium dichloride, 2.5 g of magnesium carbonate and 1146.8 g of ammonium dihydrogen phosphate were used.

### Examples 1-27

Preparation of positive electrode active material: The conditions in Example 1-27 was the same as those in Example 1-20 with the exception that in the preparation of the co-doped lithium manganese phosphate core of Example 1-27, 367.9 g of lithium carbonate, 6.5 g of dilute sulfuric acid at a concentration of 60% and 1145.4 g of ammonium dihydrogen phosphate were used.

### Examples 1-28 to 1-33

Preparation of positive electrode active material: The conditions in Examples 1-28 to 1-33 were the same as those in Example 1-20 with the exception that in the preparation of the co-doped lithium manganese phosphate core of Example 1-28 to 1-33, 1034.5g of manganese carbonate, 108.9g of ferrous carbonate, 3.7g of vanadium dichloride and 2.5g of magnesium carbonate were used, lithium carbonate was used in an amount of 367.6g, 367.2g, 366.8g, 366.4g, 366.0g and 332.4g, respectively, ammonium dihydrogen phosphate was used in an amount of 1144.5g, 1143.4g, 1142.2g, 1141.1g, 1139.9g and 1138.8g, respectively, and dilute sulfuric acid with a concentration of 60% was used in an amount of 8.2g, 9.8g, 11.4g, 13.1g, 14.7g and 16.3g, respectively.

### Examples 2-1 to 2-3

Examples 2-1 to 2-3 were the same as Example 1-1 with the exception for the preparation of positive electrode active materials.

### Example 2-1

Preparation of positive electrode active material: Example 2-1 was the same as Example 1-1 with the exception that in the preparation of lithium iron pyrophosphate (Li₂FeP₂O₇), the sintering temperature in the powder sintering step was 550°C and the sintering time was 1 hour to control the crystallinity of Li₂FeP₂O₇ to be 30%, and in the preparation of lithium iron phosphate (LiFeP04) the sintering temperature in the coating sintering step was 650°C and the sintering time was 2 hours to control the crystallinity of LiFePO₄ to be 30%.

### Example 2-2

Preparation of positive electrode active material: Example 2-2 was the same as Example 1-1 with the exception that in the preparation of lithium iron pyrophosphate (Li₂FeP₂O₇), the sintering temperature in the powder sintering step was 550°C and the sintering time was 2 hours to control the crystallinity of Li₂FeP₂O₇ to be 5, and in the preparation of lithium iron phosphate (LiFeP04) the sintering temperature in the coating sintering step was 650°C and the sintering time was 3 hours to control the crystallinity of LiFePO₄ to be 50%.

### Example 2-3

Preparation of positive electrode active material: Example 2-3 was the same as Example 1-1 with the exception that in the preparation of lithium iron pyrophosphate (Li₂FeP₂O₇), the sintering temperature in the powder sintering step was 600°C and the sintering time was 3 hours to control the crystallinity of Li₂FeP₂O₇ to be 70%, and in the preparation of lithium iron phosphate (LiFePO₄) the sintering temperature in the coating sintering step was 650°C and the sintering time was 4 hours to control the crystallinity of LiFePO₄ to be 70%.

### Examples 3-1 to 3-5

Examples 3-1 to 3-5 were the same as Example 1-1 with the exception for the weight percentage of aminoethyl aminopropyl polydimethylsiloxane in the positive electrode material composition in Preparation of full battery and Preparation of button battery.

### Example 3-1

Preparation of full battery: The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH- in a mass percentage *α* of 12%, and a number average molecular weight of 3700) at a weight ratio of 93.99:1.5:4.5:0.01 were stirred in a blender until the materials are evenly mixed to obtain a positive electrode material composition.

Preparation of button battery: The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, in a mass percentage *α* of 12%, and a number average molecular weight of 3700) at a weight ratio of 89.99:5:5:0.01 were stirred in a blender until the materials are evenly mixed to obtain a positive electrode material composition.

### Example 3-2

Preparation of full battery: The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH- in a mass percentage *α* of 12%, and a number average molecular weight of 3700) at a weight ratio of 93.9:1.5:4.5:0.1 were stirred in a blender until the materials are evenly mixed to obtain a positive electrode material composition.

Preparation of button battery: The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH- in a mass percentage *α* of 12%, and a number average molecular weight of 3700) at a weight ratio of 89.9:5:5:0.1 were stirred in a blender until the materials are evenly mixed to obtain a positive electrode material composition.

### Example 3-3

Preparation of full battery: The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH- in a mass percentage *α* of 12%, and a number average molecular weight of 3700) at a weight ratio of 93:1.5:4.5:1 were stirred in a blender until the materials are evenly mixed to obtain a positive electrode material composition.

Preparation of button battery: The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH- in a mass percentage *α* of 12%, and a number average molecular weight of 3700) at a weight ratio of 89:5:5:1 were stirred in a blender until the materials are evenly mixed to obtain a positive electrode material composition.

### Example 3-4

Preparation of full battery: The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH- in a mass percentage *α* of 12%, and a number average molecular weight of 3700) at a weight ratio of 92:1.5:4.5:2 were stirred in a blender until the materials are evenly mixed to obtain a positive electrode material composition.

Preparation of button battery: The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH- in a mass percentage *α* of 12%, and a number average molecular weight of 3700) at a weight ratio of 88:5:5:2 were stirred in a blender until the materials are evenly mixed to obtain a positive electrode material composition.

### Example 3-5

Preparation of full battery: The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH- in a mass percentage *α* of 12%, and a number average molecular weight of 3700) at a weight ratio of 89:1.5:4.5:5 were stirred in a blender until the materials are evenly mixed to obtain a positive electrode material composition.

Preparation of button battery: The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH- in a mass percentage *α* of 12%, and a number average molecular weight of 3700) at a weight ratio of 85:5:5:5 were stirred in a blender until the materials are evenly mixed to obtain a positive electrode material composition.

### Examples 3-6 to 3-23

Examples 3-6 to 3-23 were the same as Example 1-1, with the exception that aminoethyl aminopropyl polydimethylsiloxane in the positive electrode material composition was replaced with the following organopolysiloxane compounds, respectively in the preparation of button battery and the preparation of full battery.

Example 3-6: Polydimethyl siloxane (having a mass percentage *α* of the polar functional group of about 0%, and a number average molecular weight of 1200).

Example 3-7: Polymethyl chloropropyl siloxane (having a polar functional group CH₂Cl in a mass percentage *α* of 30.2%, and a number average molecular weight of 2500).

Example 3-8: Polymethyl trifluoropropyl siloxane (having a polar functional group -CF₃ in a mass percentage *α* of 44.0%, and a number average molecular weight of 1400).

Example 3-9: Mercaptopropyl polysiloxane (having a polar functional group -CH₂SH in a mass percentage *α* of about 15.0%, and a number-average molecular weight 2000).

Example 3-10: Hydroxyl end-capped polydimethylsiloxane (having a polar functional group -OH in a mass percentage *α* of about 3.4%, and a number average molecular weight of 1000).

Example 3-11: Methoxy terminated polydimethylsiloxane (having a polar functional group of methoxy in a mass percentage *α* of about 3.1%, and a number average molecular weight of 2800).

Example 3-12: Polyether end-capped polydimethylsiloxane (having a polar functional group of a polyether chain segment in a mass percentage *α* of about 10.0%, and a number average molecular weight of 2110).

Example 3-13: Side chain phosphate-grafted polydimethylsiloxane (having a polar functional group of a phosphate group in a mass percentage *α* of about 1.4%, and a number average molecular weight of 15600).

Example 3-14: 1,3,5,7-octamethyl cyclotetrasiloxane (having a mass percentage *α* of the polar functional group of about 0%, and a molecular weight of 280).

Example 3-15: Cyclopenta polydimethylsiloxane (having a mass percentage *α* of the polar functional group of about 0%, and a molecular weight of 370).

Example 3-16: Polyether end-capped polydimethylsiloxane (having a polar functional group of a polyether chain segment in a mass percentage *α* of about 55.0%, and a number average molecular weight of 25132).

Example 3-17: Polydimethylsiloxane (having a mass percentage *α* of the polar functional group of about 0%, and a number average molecular weight of 400).

Example 3-18: Polydimethylsiloxane (having a mass percentage *α* of the polar functional group of about 0%, and a number average molecular weight of 10,000).

Example 3-19: Polydimethylsiloxane (having a mass percentage *α* of the polar functional group of about 0%, and a number average molecular weight of 50,000).

Example 3-20: Polydimethylsiloxane (having a mass percentage *α* of the polar functional group of about 0%, and a number average molecular weight of 80,000).

Example 3-21: Polydimethylsiloxane (having a mass percentage *α* of the polar functional group of about 0%, and a number average molecular weight of 100,000).

Example 3-22: Polydimethylsiloxane (having a mass percentage *α* of the polar functional group of about 0%, and a number average molecular weight of 300,000).

Example 3-23: Polydimethylsiloxane (having a mass percentage *α* of the polar functional group of about 0%, and a number average molecular weight of 400,000).

### Comparative Examples 1 to 7

Comparative Examples 1 to 7 were the same as Example 1-1 with the exception that the positive electrode active material was prepared as below and no aminoethyl aminopropyl polydimethylsiloxane was added to the positive electrode active material in Preparation of full battery and Preparation of button battery.

### Comparative Example 1

Preparation of manganese oxalate: 1149.3 g of manganese carbonate were added to a reaction kettle and 5 L of deionized water and 1260.6 g of oxalic acid dihydrate (as C₂H₂O₄•2H₂O, hereinafter the same) were added. The reaction kettle was heated to 80°C and stirred at 600 rpm for 6 h until the reaction was terminated (no bubbles were generated) and a suspension of manganese oxalate was obtained. Then the suspension was filtered and the resulting filter cake was dried at 120°C, after which it was ground to obtain particles of manganese oxalate with a median particle size Dv₅₀ of 100 nm.

Preparation of lithium manganese phosphate coated with carbon: 1789.6 g of the above particles of manganese oxalate dihydrate, 369.4 g of lithium carbonate (as Li₂CO₃, hereinafter the same), 1150.1 g of ammonium dihydrogen phosphate (as NH₄H₂PO₄, hereinafter the same) and 31 g of sucrose (as C₁₂H₂₂O₁₁, hereinafter the same) were added to 20 litres of deionized water. The mixture was stirred for 10 hours homogeneously to obtain a slurry. Said slurry was transferred to a spray drying equipment for spray drying granulation, with a drying temperature of 250°C for 4 hours to obtain powder. The above powder was sintered at 700°C for 4 hours in a protective atmosphere of nitrogen (90 vol%) + hydrogen (10 vol%) to obtain lithium manganese phosphate coated with carbon.

### Comparative Example 2

The conditions in Comparative Example 2 was the same as those in Comparative Example 1 with the exception that 689.5 g of manganese carbonate was used and 463.3 g of ferrous carbonate was additionally added.

### Comparative Example 3

The conditions in Comparative Example 3 was the same as those in Comparative Example 1 with the exception that 1148.9 g of ammonium dihydrogen phosphate and 369.0 g of lithium carbonate were used, and 1.6 g of dilute sulfuric acid at a concentration of 60% was additionally added.

### Comparative Example 4

The conditions in Comparative Example 4 was the same as those in Comparative Example 1 with the exception that 689.5 g of manganese carbonate, 1148.9 g of ammonium dihydrogen phosphate and 369.0 g of lithium carbonate were used and 463.3 g of ferrous carbonate and 1.6 g of dilute sulphuric acid at a concentration of 60% were additionally added.

### Comparative Example 5

The conditions in Comparative Example 5 were the same as those in Comparative Example 4 with the following exceptions. The following step of preparing lithium iron pyrophosphate powder was additionally added. 9.52 g of lithium carbonate, 29.9 g of ferrous carbonate, 29.6 g of ammonium dihydrogen phosphate and 32.5 g of oxalic acid dihydrate were dissolved in 50 mL of deionized water. The mixture had a pH of 5. The reaction mixture was allowed to fully react with stirring for 2 hours. The reacted solution was then warmed to 80 °C and maintained at that temperature for 4 h to obtain a suspension comprising Li₂FeP₂O₇, which was filtered. The resulting filter cake was washed with deionized water and dried at 120 °C for 4 h to obtain powder. Said powder was sintered at 500°C under a nitrogen atmosphere for 4 hours and naturally cooled it to room temperature and then ground so as to the crystallinity of Li₂FeP₂O₇ was controlled to be 5%, and in the preparation of carbon cladding materials, the amount of Li₂FeP₂O₇ was 62.8g.

### Comparative Example 6

The conditions in Comparative Example 6 were the same as those in Comparative Example 4 with the following exceptions. The following step of preparing a suspension of lithium iron phosphate was additionally added: 14.7 g of lithium carbonate, 46.1 g of ferrous carbonate, 45.8 g of ammonium dihydrogen phosphate, and 50.2 g of oxalic acid dihydrate were dissolved in 500 mL of deionized water and then it was allowed to fully react with stirring for 6 hours; the reacted solution was then heated to 120°C and maintained at that temperature for 6 hours to obtain a suspension comprising LiFePO₄. In the preparation of lithium iron phosphate (LiFePO₄), the sintering temperature in the coating sintering step was 600°C and the sintering time in the coating sintering step was 4 hours to control the crystallinity of LiFePO₄ to 8%, and in the preparation of carbon cladding materials, the amount of LiFePO₄ was 62.8g.

### Comparative Example 7

Preparation of lithium iron pyrophosphate powder: 2.38 g of lithium carbonate, 7.5 g of ferrous carbonate, 7.4 g of ammonium dihydrogen phosphate and 8.1 g of oxalic acid dihydrate were dissolved in 50 mL of deionized water. The mixture has a pH of 5. The reaction mixture was allowed to fully react with stirring for 2 hours. The reacted solution was then warmed to 80 °C and maintained at that temperature for 4 h to obtain a suspension comprising Li₂FeP₂O₇, which was filtered. The resulting filter cake was washed with deionized water and dried at 120 °C for 4 h h to obtain a powder. Said powder was sintered at 500 °C under nitrogen atmosphere for 4 h and ground after it was naturally cooled to room temperature, so as to control the crystallinity of Li₂FeP₂O₇ to be 5%.

Preparation of lithium iron phosphate suspension: 11.1 g of lithium carbonate, 34.7 g of ferrous carbonate, 34.4 g of ammonium dihydrogen phosphate, 37.7 g of oxalic acid dihydrate, and 37.3 g of sucrose (as C₁₂H₂₂O₁₁, hereinafter the same) were dissolved in 1,500 mL of deionized water, and then the mixture was allowed to fully react with stirring for 6 hours. The reacted solution was then warmed to 120 °C and maintained at that temperature for 6 hours to obtain a suspension containing LiFePO₄.

Cladding: other conditions of Comparative Example 7 was the same as those of Comparative Example 4 with the exception that 15.7 g of the obtained lithium iron pyrophosphate powder was added to the suspension of lithium iron phosphate (LiFePO₄) and sucrose described above, and the sintering temperature in the coating and sintering step of the preparation process was 600°C, and the sintering time was 4 hours to control the crystallinity of LiFePO₄ to be 8%, thereby obtaining positive electrode active materials of amorphous lithium iron pyrophosphate, amorphous lithium iron phosphate, with carbon coating.

### Comparative Example 8

Comparative Example 8 was the same as Example 1-1 with the exception that no aminoethyl aminopropyl polydimethylsiloxane was added in the preparation of full battery and Preparation of button battery.

### Test methods for related performance parameters

### 1. Determination of the chemical formula of inner core and the composition of different cladding layer

The internal microstructure and surface structure of the positive electrode active material were characterized with high spatial resolution by a spherical Aberration Corrected Scanning Transmission Electron Microscope (ACSTEM). By combining with a three-dimensional reconstruction technology, the chemical formula of the core and the compositions of the first cladding layer and the second cladding layer of the positive electrode active material were obtained.

### 2. Determination of initial gram capacity of button battery

The above prepared button battery was charged to 4.3V at 0.1C, then charged at a constant voltage of 4.3V until the current was less than or equal to 0.05 mA. It was allowed to stand for 5 minutes. Then the button battery was discharged at 0.1C to 2.0V. The discharge capacity measured at this moment was initial gram capacity, denoted as DO.

### 3. Determination of average discharge voltage (V) of button battery

Under a constant temperature environment of 25°C, the above prepared button battery was allowed to stand for 5 minutes, then was discharged to 2.5V at 0.1C, then was allowed to stand for 5 minutes, then charged to 4.3 V at 0.1C, then was charged at a constant voltage of 4.3V until the current was less than or equal to 0.05mA, then was allowed to stand for 5 minutes; and then was discharged to 2.5V at 0.1C. The discharge capacity measured at this moment was initial gram capacity, denoted as DO, and the discharge energy at this moment was initial energy, denoted as E0. The average discharge voltage (V) of button battery was EO/DO.

### 4. Test of gas expansion at 60°C of full battery

The above prepared full battery was stored at 100% state of charge (SOC) at 60°C. Before and during storage, open circuit voltage (OCV) and AC internal impedance (IMP) of the battery were tested to monitor SOC and volume of the battery was measured. After every 48 hours of storage, the full battery was taken out and allowed to stand for 1 hour, and then open circuit voltage (OCV) and internal impedance (IMP) were tested. After it was cooled to room temperature, the volume of the battery was measured using a drainage method. The drainage method included measuring gravity F₁ of the battery alone with a balance that can automatically perform unit conversion with a dial data, and then placing the battery completely in deionized water (with a density of 1g/cm³), measuring gravity F₂ of the battery at this moment wherein a buoyant force F_{b} of the battery was F₁-F₂, and then according to the Archimedes principle F_{b} = ρ× g × V, the volume of the battery was calculated: V=( F₁-F₂)/(ρ×g).

From the OCV and IMP test results, it can be seen that the batteries of the examples maintain a SOC of 99% or higher throughout the testing process until the end of storage.

After 30 days of storage, the volume of battery was measured, and the increased percentage in battery volume after storage compared to the previous battery volume was calculated.

### 5. Test of cycle performance at 45 °C of full battery

Under a constant temperature environment of 45°C, the above prepared full battery was charged at 1C to 4.3V, and then charged at a constant voltage at 4.3V until the current was less than or equal to 0.05 mA. The full battery was allowed to stand for 5 minutes, then discharged at 1C to 2.5V. The discharge capacity at this moment was reported as DO. The above charge-discharge cycle was repeated until the discharge capacity was reduced to 80% of DO. The number of cycles that the battery had undergone at this moment was reported.

### 6. Determination of leaching out of transition metal ions

At 45 °C, a full battery with capacity reduced to 80% was discharged to 2.0 V of cutoff voltage at a rate of 0.1 C. Then the battery was disassembled, the negative electrode plate was taken out. 30 discs having a unit area (1540.25mm²) were randomly taken from the negative electrode plate. Inductively coupled plasma emission spectrum (ICP) was tested by using Agilent ICP-OES730. The amounts of Fe (if Fe was doped at Mn site of the positive electrode active material) and Mn were calculated on the basis of the ICP results, and then the amount of leaching out of Mn (and Fe doped at Mn site) after cycle was calculated. The testing standard was based on EPA-6010D-2014.

### 7. Determination of lattice change rate

Under a constant temperature environment of 25°C, the above prepared positive electrode active material sample was placed in XRD (Broker D8 Discover model) and tested at 1°/minute. The test data was organized and analyzed. Referring to the standard PDF card, the lattice constants a0, bO, c0, and v0 (a0, bO, and cO represent the length size in individual directions of lattice cell, respectively, v0 represents the volume of lattice cell, which can be directly obtained through XRD refinement results) were calculated.

Using the preparation method of button battery, the positive electrode active material sample was prepared into a button battery. The button battery was charged at a small rate of 0.05C until the current was decreased to 0.01C. Then the positive electrode plate was taken out the button battery and soaked in dimethyl carbonate (DMC) for 8 hours. After drying and scraping the powder, the particles with a particle size less than 500 nm were screened out. A sample was taken and its lattice volume v1 was calculated in the same way as the fresh sample was tested above. (v0-vl)/v0 × 100% representing the lattice change rate (lattice volume change rate) of before and after complete de-intercalation and intercalation of lithium was shown in the table.

### 8. Determination of Li/Mn anti-site defect concentration

The XRD results measured in the "Measurement method for lattice change rate" were compared with the PDF (Powder Diffusion File) card of standard crystal to obtain the Li/Mn anti-site defect concentration. Specifically, the XRD results tested in the "Measurement method for lattice change rate" were imported into the General Structural Analysis System (GSAS) software to automatically obtain refined results, which include the occupancy of different atoms. The Li/Mn anti-site defect concentration was obtained by reading the refined results.

### 9. Determination of surface oxygen valence

5g of the above prepared positive electrode active material sample were taken and prepared into a button battery according to the preparation method of button battery. The button battery was charged at a low rate of 0.05C until the current decreased to 0.01C. Then the positive electrode plate was taken out of the button battery and soaked in dimethyl carbonate (DMC) for 8 hours. After drying and scraping the powder, the particles with a particle size less than 500 nm were obtained by sieving. The obtained particles were measured with Electron Energy Loss Spectroscopy (EELS, Tales F200S model) to obtain the energy loss near edge structure (ELNES), which can reflect the state density and energy level distribution of elements. Based on the density of states and energy level distribution, the number of occupied electrons was calculated by integrating the density of states in valence band, thereby calculating the surface oxygen valence after charging.

### 10. Determination of compaction density

5g of the above prepared positive electrode active material powders were taken and placed in a special mold for compaction (CARVER mold in the United States, model 13mm), and then the mold was placed on a compaction density instrument. 3T (tonnes) of pressure was applied and thickness of powders under the pressure was read on the equipment (i.e. the thickness after the pressure is removed, the area of the container used for testing being 1540.25mm²). The compaction density was calculated via ρ= m/v. 11. X-ray diffraction method for testing the crystallinity of pyrophosphates and phosphates:

5g of the above prepared positive active material powder was taken for the measurement of a total scattering intensity by X-ray, which was the sum of scattering intensity of substances in the whole space, and was only related to intensity of primary rays, chemical structure, and the total number of electrons participating in diffraction, i.e., how much the mass is, and had nothing to do with ordinal state of samples. And then crystallized scattering and non-crystallized scattering from the diffractogram were separated, and the degree of crystallinity was a ratio of the intensity of crystallized scattering portion to the total intensity of scattering. 12. Crystal plane spacing and orientation angle:

1g of the above prepared positive electrode active material powder each was placed in a 50mL test tube, to which lOmL of alcohol with 75% by mass was injected, and then it was subjected to sufficient stirring and dispersion for 30 minutes. And then an appropriate amount of the above solution was dropped on ta 300-mesh copper mesh with a clean disposable plastic pipette. At this time, some of the powder would be left on the copper mesh, and then the copper mesh with samples would be transferred to a TEM (Talo F200s G2) sample chamber for testing, thereby obtaining original images of TEM testing.

The above TEM images were opened in DigitalMicrograph software and subjected to Fourier transform (automatically done by the software after clicking the operation) to get a diffraction pattern, the distance from the diffracted spot to the center of diffraction pattern was measured to get a crystal plane spacing, and the orientation angle was calculated according to the Bragg's equation.

### 13. Determination of powder resistivity

An appropriate amount of positive electrode material composition sample powder used for preparing a full battery was taken and placed in a special mold of a powder resistivity tester. The pressure for testing was set, and the powder resistivity at different intensity of pressures was obtained. In the present application, the pressure for testing can be set to 12 Mpa. The testing instrument can be Suzhou lattice ST2722-SZ type four probe powder resistivity tester.

### 14. Determination of specific surface area

5g of positive electrode material composition sample powder used for preparing a full battery were taken. The specific surface area was tested by Micromeritics Tri-Star 3020 specific surface area aperture analysis tester. A method for calculating the specific surface area is BET (BrunauerEmmett Teller) method.

### 15. Determination of contact angle

A drop of ethylene carbonate (EC) was dropped on the surface of the positive electrode film layer at room temperature. The solid-liquid contact angle over a period of 60 seconds was measured by LSA 200 optical contact angle testing instrument of LAUD A Scientific company in Germany.

Table 1 shows the composition of the positive electrode active material in Examples 1-1 tol-33 and Comparative Examples 1-8.

Table 2 shows types and contents of organopolysiloxane compounds in the positive electrode material composition of Examples 1-1 to 1-33, Examples 2-1 to 2-3, Examples 3-1 to 3-23.

Table 3 shows the performance results measured by the above performance testing methods for the positive electrode active material, positive electrode material composition, positive electrode plate, button battery or full battery of Examples 1-1 to 1-33 and Comparative Examples 1-8.

Table 4 shows the performance results measured by the above performance testing methods for the positive electrode active material, positive electrode material composition, positive electrode plate, button battery or full battery of Examples 2-1 to 2-3.

Table 5 shows the performance results measured by the above performance testing methods for the positive electrode material composition, positive electrode plate, button battery or full battery of Examples 3-1 to 3-23.

**Table 1**

| No. | Positive Electrode Active Material | | |
|---|---|---|---|
| | Core | First cladding layer | Second cladding layer |
| Comparative Example 1 | LiMnPO₄ | - | 1% carbon |
| Comparative Example 2 | LiMn_{0.60}Fe_{0.40}PO₄ | - | 1% carbon |
| Comparative Example 3 | Li_{0.999}MnP_{0.999}S_{0.001}O₄ | - | 1% carbon |
| Comparative Example 4 | Li_{0.999}Mn_{0.60}Fe_{0.40}P_{0.999}S_{0.001}O₄ | - | 1% carbon |
| Comparative Example 5 | Li_{0.999}Mn_{0.60}Fe_{0.40}P_{0.999}S_{0.001}O₄ | 4% amorphous Li₂FeP₂O₇ | 1% carbon |
| Comparative Example 6 | Li_{0.999}Mn_{0.60}Fe_{0.40}P_{0.999}S_{0.001}O₄ | 4% amorphous LiFePO₄ | 1% carbon |
| Comparative Example 7 | Li_{0.999}Mn_{0.60}Fe_{0.40}P_{0.999}S_{0.001}O₄ | 1% amorphous Li₂FeP₂O₇+3% amorphous LiFePO₄ | 1% carbon |
| Comparative Example 8 | Li_{0.999}Mn_{0.60}Fe_{0.393}V_{0.004}Co_{0.003}P_{0.999}S_{0.001}O₄ | 1% Li₂FeP₂O₇/3% LiFePO₄ | 2% carbon |
| Example 1-1 | Li_{0.999}Mn_{0.60}Fe_{0.393}V_{0.004}Co_{0.003}P_{0.999}S_{0.001}O₄ | 1% Li₂FeP₂O₇/3% LiFePO₄ | 2% carbon |
| Example 1-2 | Li_{0.999}Mn_{0.60}Fe_{0.40}P_{0.999}S_{0.001}O₄ | 0.8% Li₂FeP₂O₇/2.4% LiFePO₄ | 1% carbon |
| Example 1-3 | Li_{0.999}Mn_{0.60}Fe_{0.40}P_{0.999}S_{0.001}O₄ | 1% Li₂FeP₂O₇/3% LiFePO₄ | 1% carbon |
| Example 1-4 | Li_{0.999}Mn_{0.60}Fe_{0.40}P_{0.999}S_{0.001}O₄ | 1.2% Li₂FeP₂O₇/3.6% LiFePO₄ | 1% carbon |
| Example 1-5 | Li_{0.999}Mn_{0.60}Fe_{0.40}P_{0.999}S_{0.001}O₄ | 1.4% Li₂FeP₂O₇/4.2% LiFePO₄ | 1% carbon |
| Example 1-6 | Li_{0.999}Mn_{0.60}Fe_{0.40}P_{0.999}S_{0.001}O₄ | 1.6% Li₂FeP₂O₇/4.8% LiFePO₄ | 1% carbon |
| Example 1-7 | Li_{0.999}Mn_{0.60}Fe_{0.40}P_{0.999}S_{0.001}O₄ | 1% Li₂FeP₂O₇/3% LiFePO₄ | 2% carbon |
| Example 1-8 | Li_{0.999}Mn_{0.60}Fe_{0.40}P_{0.999}S_{0.001}O₄ | 1% Li₂FeP₂O₇/3% LiFePO₄ | 4% carbon |
| Example 1-9 | Li_{0.999}Mn_{0.60}Fe_{0.40}P_{0.999}S_{0.001}O₄ | 1% Li₂FeP₂O₇/3% LiFePO₄ | 5% carbon |
| Example 1-10 | Li_{0.999}Mn_{0.60}Fe_{0.40}P_{0.999}S_{0.001}O₄ | 1% Li₂FeP₂O₇/3% LiFePO₄ | 6% carbon |
| Example 1-11 | Li_{0.999}Mn_{0.60}Fe_{0.40}P_{0.999}S_{0.001}O₄ | 1.5% Li₂FeP₂O₇/2.5% LiFePO₄ | 2% carbon |
| Example 1-12 | Li_{0.999}Mn_{0.60}Fe_{0.40}P_{0.999}S_{0.001}O₄ | 2% Li₂FeP₂O₇/2% LiFePO₄ | 2% carbon |
| Example 1-13 | Li_{0.999}Mn_{0.60}Fe_{0.40}P_{0.999}S_{0.001}O₄ | 2.5% Li₂FeP₂O₇/1,5% LiFePO₄ | 2% carbon |
| Example 1-14 | Li_{0.999}Mn_{0.60}Fe_{0.40}P_{0.999}S_{0.001}O₄ | 3% Li₂FeP₂O₇/1% LiFePO₄ | 2% carbon |
| Example 1-15 | Li_{0.999}Mn_{0.60}Zn_{0.40}P_{0.999}S_{0.001}O₄ | 3% Li₂FeP₂O₇/1% LiFePO₄ | 2% carbon |
| Example 1-16 | Li_{0.993}Mn_{0.6}Ni_{0.393}Zn_{0.004}Ti_{0.003}P_{0.999}S_{0.001}O₄ | 1% Li₂FeP₂O₇/3% LiFePO₄ | 2% carbon |
| Example 1-17 | Li_{0.999}Mn_{0.60}Fe_{0.393}V_{0.007}P_{0.999}S_{0.001}O₄ | 1% Li₂FeP₂O₇/3% LiFePO₄ | 2% carbon |
| Example 1-18 | Li_{0.999}Mn_{0.60}Fe_{0.393}V_{0.004}Mg_{0.003}P_{0.999}S_{0.001}O₄ | 1% Li₂FeP₂O₇/3% LiFePO₄ | 2% carbon |
| Example 1-19 | LiMn_{0.60}Fe_{0.393}V_{0.004}Mg_{0.003}P_{0.999}N_{0.001}O₄ | 1% Li₂FeP₂O₇/3% LiFePO₄ | 2% carbon |
| Example 1-20 | Li_{1.001}Mn_{0.60}Fe_{0.393}V_{0.004}Mg_{0.003}P_{0.999}Si_{0.001}O₄ | 1% Li₂FeP₂O₇/3% LiFePO₄ | 2% carbon |
| Example 1-21 | Li_{1.001}Mn_{0.55}Fe_{0.40}V_{0.025}Mg_{0.025}P_{0.999}Si_{0.001}O₄ | 1% Li₂FeP₂O₇/3% LiFePO₄ | 2% carbon |
| Example 1-22 | Li_{1.001}Mn_{0.65}Fe_{0.25}V_{0.05}Mg_{0.05}P_{0.999}Si_{0.001}O₄ | 1% Li₂FeP₂O₇/3% LiFePO₄ | 2% carbon |
| Example 1-23 | Li_{1.004}Mn_{0.7}Fe_{0.2}V_{0.05}Mg_{0.05}P_{0.998}B_{0.002}O₄ | 1% Li₂FeP₂O₇/3% LiFePO₄ | 2% carbon |
| Example 1-24 | Li_{1.006}Mn_{0.75}Fe_{0.15}V_{0.05}Mg_{0.05}P_{0.997}B_{0.003}O₄ | 1% Li₂FeP₂O₇/3% LiFePO₄ | 2% carbon |
| Example 1-25 | Li_{1.002}Mn_{0.60}Fe_{0.393}V_{0.004}Mg_{0.003}P_{0.998}Si_{0.002}O₄ | 1% Li₂FeP₂O₇/3% LiFePO₄ | 2% carbon |
| Example 1-26 | Li_{0.997}Mn_{0.80}Fe_{0.194}V_{0.003}Mg_{0.003}P_{0.997}S_{0.003}O₄ | 1% Li₂FeP₂O₇/3% LiFePO₄ | 2% carbon |
| Example 1-27 | Li_{0.996}Mn_{0.60}Fe_{0.393}V_{0.004}Mg_{0.003}P_{0.996}S_{0.004}O₄ | 1% Li₂FeP₂O₇/3% LiFePO₄ | 2% carbon |
| Example 1-28 | Li_{0.995}Mn_{0.9}Fe_{0.094}V_{0.003}Mg_{0.003}P_{0.995}S_{0.005}O₄ | 1% Li₂FeP₂O₇/3% LiFePO₄ | 2% carbon |
| Example 1-29 | Li_{0.994}Mn_{0.90}Fe_{0.094}V_{0.003}Mg_{0.003}P_{0.994}S_{0.006}O₄ | 1% Li₂FeP₂O₇/3% LiFePO₄ | 2% carbon |
| Example 1-30 | Li_{0.993}Mn_{0.90}Fe_{0.094}V_{0.003}Mg_{0.003}P_{0.993}Sv_{.007}O₄ | 1% Li₂FeP₂O₇/3% LiFePO₄ | 2% carbon |
| Example 1-31 | Li_{0.992}Mn_{0.90}Fe_{0.094}V_{0.003}Mg_{0.003}P_{0.992}S_{0.008}O₄ | 1% Li₂FeP₂O₇/3% LiFePO₄ | 2% carbon |
| Example 1-32 | Li_{0.991}Mn_{0.90}Fe_{0.094}V_{0.003}Mg_{0.003}P_{0.991}S_{0.009}O₄ | 1% Li₂FeP₂O₇/3% LiFePO₄ | 2% carbon |
| Example 1-33 | Li_{0.9}Mn_{0.90}Fe_{0.094}V_{0.003}Mg_{0.003}P_{0.9}S_{0.1}O₄ | 1% Li₂FeP₂O₇/3% LiFePO₄ | 2% carbon |
| Note: 1) In Examples 1-1 to 1-33, Li₂FeP₂O₇ and LiFePO₄ both have a crystalline of 100%; 2) In Comparative Example 5-7, amorphous Li₂FeP₂O₇ has a crystalline of 5% and amorphous LiFePO₄ has a crystallinity of 8%_{∘} | | | |

**Table 2**

| No. | Organopolysiloxane | | | |
|---|---|---|---|---|
| | Type | Content a of polar functional groups | Number average molecular weight | Content in positive electrode material composition |
| Comparative Example 1 to 8 | - | - | - | - |
| Example 1-1 to 1-33 | Aminoethylaminopropyl polydimethylsiloxane | 12.0% | 3700 | 0.6wt% |
| Example 2-1 to 2-3 | | | | |
| Example 3-1 | Aminoethylaminopropyl polydimethylsiloxane | 12.0% | 3700 | 0.01wt% |
| Example 3-2 | Aminoethylaminopropyl polydimethylsiloxane | 12.0% | 3700 | 0.1wt% |
| Example 3-3 | Aminoethylaminopropyl polydimethylsiloxane | 12.0% | 3700 | 1wt% |
| Example 3-4 | Aminoethylaminopropyl polydimethylsiloxane | 12.0% | 3700 | 2wt% |
| Example 3-5 | Aminoethylaminopropyl polydimethylsiloxane | 12.0% | 3700 | 5wt% |
| Example 3-6 | Polydimethylsiloxane | 0% | 1200 | 0.6wt% |
| Example 3-7 | Polymethylchloropropylsiloxane | 30.2% | 2500 | 0.6wt% |
| Example 3-8 | Polymethyltrifluoropropylsiloxane | 44.0% | 1400 | 0.6wt% |
| Example 3-9 | Mercaptopropyl polysiloxane | 15.0% | 2000 | 0.6wt% |
| Example 3-10 | Hydroxy end-capped polysiloxane | 3.4% | 1000 | 0.6wt% |
| Example 3-11 | Methoxy-terminated Polysiloxane | 3.1% | 2800 | 0.6wt% |
| Example 3-12 | Polyether end-capped Polysiloxane | 10.0% | 2110 | 0.6wt% |
| Example 3-13 | Pendent Phosphate Grafted Polydimethylsiloxane | 1.4% | 15600 | 0.6wt% |
| Example 3-14 | 1,3,5,7-Octamethylcyclotetrasiloxane | 0% | 280 | 0.6wt% |
| Example 3-15 | Cyclopentapolydimethylsiloxane | 0% | 370 | 0.6wt% |
| Example 3-16 | Polyether End-capped polydimethylsiloxane | 55.0% | 25312 | 0.6wt% |
| Example 3-17 | Polydimethylsiloxane | 0% | 400 | 0.6wt% |
| Example 3-18 | Polydimethylsiloxane | 0% | 10000 | 0.6wt% |
| Example 3-19 | Polydimethylsiloxane | 0% | 50000 | 0.6wt% |
| Example 3-20 | Polydimethylsiloxane | 0% | 80000 | 0.6wt% |
| Example 3-21 | Polydimethylsiloxane | 0% | 100000 | 0.6wt% |
| Example 3-22 | Polydimethylsiloxane | 0% | 300000 | 0.6wt% |
| Example 3-23 | Polydimethylsiloxane | 0% | 400000 | 0.6wt% |

**Table 3**

| No. | Positive Electrode Active Materials | | | | Positive Electrode Material Compositions | | Positive Electrode Plate | Button battery or Full battery | | | | |
|---|---|---|---|---|---|---|---|---|---|---|---|---|
| | Lattic e chang e rate (%) | Li/Mn anti-site defect concentratio n (%) | surfac e oxyge n valenc e | Compacti on density (g/cm³) | Powder resistivit y (Ω/cm) | Specific surface area (m²/g) | Contact angle (°) | O.lCgram capacity of button battery (mAh/g) | Average discharge voltage of button battery (V) | Battery expansio n after storage at 60°C for 30 d (%) | Cycle numbers corresponding to 80% capacity retention at 45°C | leaching out of Fe and Mn (ppm) after cycle |
| Comparative Example 1 | 11.4 | 3.2 | -1.55 | 1.81 | 28.792 | 17.5 | 0.8 | 125.5 | 4.02 | 48.5 | 185 | 2060 |
| Comparative Example 2 | 8.7 | 2.8 | -1.76 | 1.92 | 29.762 | 18.3 | 1.6 | 134.8 | 3.76 | 42.5 | 358 | 1597 |
| Comparative Example 3 | 9.8 | 2.5 | -1.66 | 1.88 | 28.406 | 17.2 | 1.2 | 128.1 | 4.05 | 45.4 | 267 | 1895 |
| Comparative Example 4 | 6.7 | 1.8 | -1.83 | 1.82 | 28.908 | 18.1 | 2.5 | 140.5 | 3.78 | 38.2 | 417 | 1279 |
| Comparative Example 5 | 6.5 | 1.8 | -1.9 | 1.79 | 30.127 | 17.4 | 2 | 140.2 | 3.73 | 12.5 | 519 | 208 |
| Comparative Example 6 | 6.6 | 1.8 | -1.91 | 1.83 | 30.371 | 17.2 | 1.6 | 140.2 | 3.74 | 11.3 | 528 | 318 |
| Comparative Example 7 | 6.6 | 1.8 | -1.9 | 1.84 | 29.087 | 17.5 | 2.5 | 140.1 | 3.75 | 8.6 | 682 | 174 |
| Comparative Example 8 | 2.4 | 0.4 | -1.98 | 2.41 | 23.589 | 17.5 | 1.8 | 158.2 | 3.78 | 1.8 | 1328 | 8 |
| Example 1-1 | 2.4 | 0.4 | -1.98 | 2.41 | 18.021 | 13.1 | 17.2 | 158.8 | 3.78 | 1.8 | 1798 | 4 |
| Example 1-2 | 6.6 | 1.2 | -1.97 | 2.43 | 23.475 | 13.6 | 16.8 | 148.9 | 3.75 | 6.4 | 1204 | 42 |
| Example 1-3 | 6.5 | 1.1 | -1.97 | 2.45 | 23.041 | 14.1 | 17.4 | 148.5 | 3.74 | 5.3 | 1314 | 28 |
| Example 1-4 | 6.5 | 0.8 | -1.97 | 2.44 | 24.174 | 14.4 | 17.6 | 147.6 | 3.73 | 4.8 | 1363 | 12 |
| Example 1-5 | 6.5 | 0.7 | -1.98 | 2.45 | 24.792 | 13.9 | 16.9 | 146.8 | 3.73 | 3.6 | 1464 | 8 |
| Example 1-6 | 6.6 | 0.6 | -1.98 | 2.45 | 24.879 | 13.8 | 17.1 | 145.9 | 3.72 | 2.8 | 1581 | 3 |
| Example 1-7 | 6.5 | 1 | -1.97 | 2.46 | 19.156 | 13.6 | 16.9 | 147.5 | 3.73 | 4.8 | 1365 | 21 |
| Example 1-8 | 6.5 | 1 | -1.97 | 2.47 | 12.683 | 13.9 | 17.3 | 146.3 | 3.75 | 4.3 | 1410 | 19 |
| Example 1-9 | 6.4 | 1.1 | -1.98 | 2.44 | 10.065 | 14.3 | 17.6 | 144.8 | 3.73 | 3.7 | 1501 | 11 |
| Example 1-10 | 6.4 | 1.1 | -1.98 | 2.41 | 6.497 | 14.9 | 17.3 | 142.1 | 3.73 | 2.8 | 1614 | 8 |
| Example 1-11 | 6.5 | 1.1 | -1.97 | 2.44 | 19.025 | 13.6 | 17.2 | 147.8 | 3.74 | 5.2 | 1321 | 21 |
| Example 1-12 | 6.6 | 1 | -1.96 | 2.47 | 18.936 | 13.2 | 16.7 | 147.6 | 3.74 | 6.1 | 1296 | 13 |
| Example 1-13 | 6.7 | 1.2 | -1.96 | 2.46 | 19.028 | 13.6 | 17.3 | 147.2 | 3.74 | 6.9 | 1213 | 9 |
| Example 1-14 | 6.7 | 1.1 | -1.97 | 2.45 | 18.994 | 13.8 | 17.6 | 147 | 3.75 | 7.5 | 1164 | 5 |
| Example 1-15 | 7.5 | 2.5 | -1.97 | 2.45 | 18.963 | 13.1 | 17.1 | 138.6 | 3.86 | 8.4 | 1252 | 13 |
| Example 1-16 | 5.4 | 0.8 | -1.97 | 2.44 | 18.597 | 13.6 | 18.6 | 139.4 | 3.85 | 4.5 | 1375 | 9 |
| Example 1-17 | 4.2 | 0.6 | -1.97 | 2.45 | 19.833 | 13.5 | 17.7 | 153.2 | 3.78 | 3.2 | 1640 | 8 |
| Example 1-18 | 2.6 | 0.5 | -1.97 | 2.45 | 18.111 | 13.6 | 17.5 | 155.6 | 3.8 | 2.7 | 1643 | 5 |
| Example 1-19 | 2.3 | 0.5 | -1.98 | 2.45 | 18.821 | 14.2 | 17.1 | 157.7 | 3.8 | 2.6 | 1742 | 4 |
| Example 1-20 | 2.4 | 0.7 | -1.98 | 2.44 | 19.932 | 13.4 | 16.8 | 157.4 | 3.83 | 2.4 | 1764 | 6 |
| Example 1-21 | 2.2 | 0.5 | -1.98 | 2.43 | 18.894 | 13.8 | 18.2 | 158.4 | 3.77 | 2 | 1853 | 3 |
| Example 1-22 | 2.5 | 0.8 | -1.98 | 2.42 | 18.153 | 14.1 | 17.3 | 156.9 | 3.83 | 2.4 | 1681 | 7 |
| Example 1-23 | 2.6 | 0.8 | -1.98 | 2.43 | 18.001 | 13.6 | 17.5 | 157.1 | 3.84 | 2.6 | 1665 | 6 |
| Example 1-24 | 2.6 | 0.8 | -1.98 | 2.44 | 19.821 | 14.1 | 16.9 | 157.4 | 3.83 | 2.6 | 1723 | 5 |
| Example 1-25 | 2.3 | 0.7 | -1.98 | 2.45 | 19.932 | 13.1 | 18.3 | 157.3 | 3.78 | 2.4 | 1766 | 5 |
| Example 1-26 | 2.8 | 0.9 | -1.98 | 2.45 | 18.294 | 13.6 | 16.3 | 156.2 | 3.85 | 2.9 | 1528 | 7 |
| Example 1-27 | 2.2 | 0.6 | -1.98 | 2.46 | 18.233 | 13.9 | 17.8 | 157.5 | 3.78 | 2.4 | 1798 | 6 |
| Example 1-28 | 3.2 | 1.1 | -1.96 | 2.45 | 18.563 | 13.6 | 17.4 | 156.8 | 3.89 | 3.2 | 1483 | 8 |
| Example 1-29 | 3 | 1.2 | -1.95 | 2.44 | 18.577 | 13.4 | 17.7 | 156.2 | 3.89 | 3.2 | 1436 | 9 |
| Example 1-30 | 2.8 | 1.4 | -1.95 | 2.45 | 19.833 | 13.6 | 17.5 | 155.4 | 3.91 | 3.6 | 1348 | 11 |
| Example 1-31 | 2.6 | 1.4 | -1.94 | 2.44 | 18.001 | 14.3 | 17.4 | 155.8 | 3.89 | 3 | 1315 | 12 |
| Example 1-32 | 2.4 | 1.2 | -1.94 | 2.45 | 18.221 | 13.2 | 17.1 | 154.2 | 3.88 | 2.5 | 1292 | 13 |
| Example 1-33 | 2.1 | 0.9 | -1.94 | 2.44 | 19.932 | 14.2 | 18.9 | 154.5 | 3.89 | 2.7 | 1279 | 15 |

**Table 4**

| No. | Positive Electrode Active Materials | | | | | Positive Electrode Material Compositions | | Positive Electrode Plate | Button battery or Full battery | | | | |
|---|---|---|---|---|---|---|---|---|---|---|---|---|---|
| | Cry stall inity of pyroph osphate and phosph ate | Lattice change rate(%) | Li/Mn anti-site defect concentr ation (%) | surface oxygen valence | Compactio n density (g/cm³) | Powder resistivity (Ω/cm) | Specific surface area (m²/g) | Contact angle (°) | 0.1C gram capacity of button battery (mAh/g) | Average discharge voltage of button battery (V) | Battery expansio n after storage at 60°C for 30 d (%) | Cycle numbers correspon ding to 80% capacity retention at 45°C | leaching out of Fe and Mn (ppm) after cycle |
| Example 1-1 | 100% | 2.4 | 0.4 | -1.98 | 2.41 | 18.021 | 13.1 | 17.2 | 158.8 | 3.78 | 1.8 | 1798 | 4 |
| Example 2-1 | 30% | 6.3 | 1.9 | -1.88 | 2.13 | 19.833 | 13.7 | 17.3 | 145.5 | 3.74 | 5.6 | 992 | 42 |
| Example 2-2 | 50% | 4.7 | 1.2 | -1.89 | 2.29 | 19.111 | 13.6 | 16.9 | 149.3 | 3.75 | 4.7 | 1265 | 15 |
| Example 2-3 | 70% | 3.5 | 0.8 | -1.91 | 2.32 | 19.821 | 14.3 | 17.4 | 151.1 | 3.76 | 3.8 | 1427 | 8 |

**Table 5**

| No. | Positive Electrode Material Compositions | | Positive Electrode Plate | Button battery or Full battery | | | | |
|---|---|---|---|---|---|---|---|---|
| | Powder resistivity (Ω/cm) | Specific surface area (m²/g) | Contact angle (°) | 0.1C gram capacity of button battery (mAh/g) | Average discharge voltage of button battery (V) | Battery expansion after storage at 60°C for 30 d (%) | Cycle numbers corresponding to 80% capacity retention at 45°C | leaching out of Fe and Mn (ppm) after cycle |
| Example 3-1 | 22.012 | 16.9 | 8.3 | 158.2 | 3.78 | 1.8 | 1379 | 7 |
| Example 3-2 | 19.147 | 15.3 | 13.9 | 158.4 | 3.78 | 1.8 | 1569 | 6 |
| Example 3-3 | 21.985 | 11.9 | 21.6 | 158.1 | 3.78 | 1.8 | 1699 | 5 |
| Example 3-4 | 23.152 | 10.9 | 25.1 | 158 | 3.79 | 1.7 | 1608 | 4 |
| Example 3-5 | 51.238 | 9.8 | 36.6 | 156.2 | 3.77 | 1.8 | 1432 | 6 |
| Example 3-6 | 18.346 | 13.5 | 19.4 | 158.4 | 3.78 | 1.7 | 1781 | 3 |
| Example 3-7 | 18.692 | 13.9 | 18.9 | 158.3 | 3.79 | 1.6 | 1785 | 5 |
| Example 3-8 | 17.895 | 14.2 | 20.2 | 158.5 | 3.78 | 1.5 | 1801 | 3 |
| Example 3-9 | 19.01 | 13.7 | 18.4 | 158.3 | 3.77 | 1.8 | 1811 | 4 |
| Example 3-10 | 18.69 | 13.9 | 18.5 | 158.2 | 3.78 | 1.8 | 1823 | 5 |
| Example 3-11 | 18.237 | 13.4 | 18.1 | 158 | 3.78 | 1.9 | 1797 | 4 |
| Example 3-12 | 18.497 | 13.8 | 16.9 | 158.3 | 3.79 | 1.5 | 1802 | 2 |
| Example 3-13 | 19.02 | 14.1 | 17.6 | 158.3 | 3.78 | 1.6 | 1815 | 5 |
| Example 3-14 | 19.696 | 13.3 | 15.9 | 158.2 | 3.76 | 1.8 | 1743 | 5 |
| Example 3-15 | 19.379 | 13.6 | 16.2 | 158.3 | 3.77 | 1.7 | 1733 | 3 |
| Example 3-16 | 46.793 | 14.5 | 6.3 | 157.7 | 3.78 | 1.6 | 1569 | 6 |
| Example 3-17 | 18.134 | 13.8 | 15.8 | 158.4 | 3.77 | 1.8 | 1768 | 5 |
| Example 3-18 | 19.986 | 13.4 | 23.4 | 158.2 | 3.78 | 1.6 | 1775 | 5 |
| Example 3-19 | 20.578 | 13.2 | 23.9 | 158.2 | 3.78 | 1.8 | 1770 | 3 |
| Example 3-20 | 21.095 | 13.0 | 25.1 | 158.1 | 3.78 | 1.8 | 1765 | 4 |
| Example 3-21 | 23.986 | 12.8 | 26.8 | 158 | 3.79 | 1.9 | 1760 | 5 |
| Example 3-22 | 24.679 | 12.1 | 26.9 | 157.9 | 3.78 | 1.8 | 1752 | 4 |
| Example 3-23 | 39.618 | 11.6 | 39.2 | 156.9 | 3.78 | 1.7 | 1731 | 5 |

As can be seen from the combination of Examples 1-1 to 1-33 and Comparative Examples 1 to 8, the presence of the first cladding layer is favorable to reducing the Li/Mn antisite defect concentration and the leaching out of Fe and Mn after cycle of the resulting material, increasing the gram capacity of batteries, and improving the safety performance and the cycle performance of batteries. When other elements are doped at the Mn site and the phosphorus site, respectively, the lattice change rate, the antisite defect concentration, and the leaching out of Fe and Mn in the resulting material can be significantly reduced, the gram capacity of batteries can be increased, and the safety performance and cycle performance of batteries can be improved. When the combination of the positive electrode active material the organopolysiloxane compound of Examples 1-1 to 1-33 is used, erosion of the surface of the positive electrode active material caused by an electrolyte can be further alleviated, and the leaching out of Fe and Mn can be reduced, and thus the cycle performance of batteries can be further improved.

As can be seen from the combination of Examples 1-2 to 1-6, as the amount of the first cladding layer is increased from 3.2% to 6.4%, the Li/Mn antisite defect concentration of the resulting material can be gradually decreased, and the leaching out of Fe and Mn after cycle can be gradually decreased, corresponding to the improvement of the safety performance and the cycle performance of batteries at 45° C, with a slight decrease in the gram capacity. Optionally, when the total amount of the first cladding layer is from 4 wt% to 5.6 wt%, the comprehensive performance of the corresponding battery is optimal.

As can be seen from the combination of Examples 1-3 and Examples 1-7 to 1-10, as the amount of the second cladding layer is increased from 1% to 6%, the leaching out of Fe and Mn in the resulting material after cycle is gradually decreased, corresponding to the improvement of the safety performance and the cycle performance of batteries at 45° C, with a slight decrease in the gram capacity. Optionally, when the total amount of the second cladding layer is from 3 wt% to 5 wt%, the comprehensive performance of the corresponding battery is optimal.

As can be seen from the combination of Examples 1-11 to 1-15 and the Comparative Examples 5 to 6, the improvement of battery performances is more pronounced when both Li₂FeP₂O₇ and LiFePO₄ are present in the first cladding layer, and in particular when a weight ratio of Li₂FeP₂O₇ and LiFePO₄ is from 1:3 to 3:1 and especially when a weight ratio of Li₂FeP₂O₇ and LiFePO₄ is from 1:3 to 1:1.

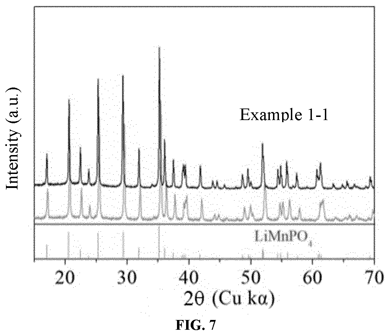

FIG. 7 is a comparison of an XRD spectrum of the core of the positive active materials prepared in Example 1-1 with the XRD standard spectrum (00-033-0804) of lithium manganese phosphate. As shown in FIG. 7, the core of the positive electrode active material of the present application and undoped LiMnPO₄ have basically the same primary characteristic peak positions, indicating that the core of the positive electrode active material of the present application has no impurity phase and the improvement of battery performances is mainly caused by doping of elements rather than by an impurity phase.

As can be seen from Table 4, with the gradual increase in crystallinity of pyrophosphate salts and phosphate salts in the first cladding layer, the lattice change rate, Li/Mn antisite defect concentration, and leaching out of Fe and Mn of the corresponding materials are gradually decreased, and the gram capacity of batteries is gradually increased, and the safety performance and cycle performance are also gradually improved.

As can be seen from Table 5, in the case where the positive electrode active material is the same, selecting an organopolysiloxane compound satisfying one or more of a suitable polar functional group content, number average molecular weight, and additive amount to be paired with the positive electrode active material is capable of further improving the cycle performance of batteries without affecting their energy density and kinetic performance.

It can also be seen from the combination of Examples 1-1, 3-1 to 3-5 that the powder resistance of the positive electrode active material composition decreases and then increases as the amount of the organopolysiloxane compound increases. The possible reason for this is that the amount of the organopolysiloxane compound within a certain range can reduce interaction between the conductive agents and alleviate agglomeration of the conductive agents due to its hydrophobicity, and thus a better conductive network can be formed.

It should be noted that this application is not limited to the above embodiments. The above embodiments are only provided as examples, and within the technical solution of the present application, embodiments having substantially the same configuration as the technical idea and exerting the same effects are all included within the technical scope of the present application. In addition, various modifications to the embodiments that can be conceived by those skilled in the art without departing from the scope of the spirit of the present application and other embodiments constructed by combining some constituent elements in the embodiments are also included in the scope of the present application.

## Claims

1. A positive electrode material composition, comprising a positive electrode active material with a core-shell structure and an organopolysiloxane compound,
wherein
said positive electrode active material comprises an core and a shell covering said core,
said core comprises Li₁₊ₓMn_{1-y}A_{y}P_{1-z}R_{z}O₄, x is in the range of -0.100 to 0.100, optionally in the range of -0.100 to 0.006, y is in the range of 0.001 to 0.500, optionally in the range of 0.100 to 0.450, z is in the range of 0.001 to 0.100, said A comprises one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co and Mg, said R comprises one or more elements selected from B, Si, N and S;
said shell comprises a first cladding layer covering said core and a second cladding layer covering said first cladding layer, said first cladding layer comprises pyrophosphate salts MP₂O₇ and phosphate salts XPO₄, said M and X each independently comprises one or more elements selected from Li, Fe, Ni, Mg, Co, Cu, Zn, Ti, Ag, Zr, Nb, and Al, and said second cladding layer comprises carbon.

2. The positive electrode material composition as claimed in claim 1, wherein said organopolysiloxane compound comprises at least one structural unit shown in Formula 1, 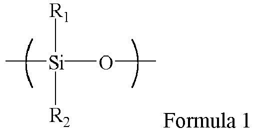
R₁ and R₂ each independently represent H or at least one functional group selected from the group consisting of: -COOH, -OH, -SH, -CN, -SCN, amino groups, phosphate groups, carboxylate groups, amide groups, aldehyde groups, sulfonyl groups, polyether chain segments, C₁-C₂₀ aliphatic hydrocarbyl groups, C₁-C₂₀ halogenated aliphatic hydrocarbyl group, C₁-C₂₀ heteroaliphatic hydrocarbyl groups, C₁-C₂₀ halogenated heteroaliphatic hydrocarbyl groups, C₆-C₂₀ aromatic hydrocarbyl groups, C₆-C₂₀ halogenated aromatic hydrocarbyl groups, C₂-C₂₀ heteroaromatic hydrocarbyl groups, and C₂-C₂₀ halogenated heteroaromatic groups,
optionally, R₁ and R₂ each independently represent H or at least one functional group selected from the group consisting of: -COOH, -OH, -SH, amino groups, phosphate groups, polyether chain segments, C₁-C₈ alkyl groups, C₁-Cs haloalkyl groups, C₁-C₈ heteroalkyl groups, C₁-C₈ haloheteroalkyl groups, C₂-C₈ alkenyl groups, C₂-C₈ haloalkenyl groups, and phenyl,
more optionally, R₁ and R₂ each independently represent H or at least one functional group selected from consisting of: -OH, -SH, amino groups, phosphate groups, polyether chain segments, Ci-Cs alkyl groups, C₁-C₈ haloalkyl groups, C₁-C₈ heteroalkyl groups, C₁-C₈ haloheteroalkyl groups, C₂-C₈ alkenyl groups, and C₂-C₈ haloalkenyl groups.

3. The positive electrode material composition as claimed in any one of claims 1 to 2, wherein the organopolysiloxane compound comprises one or more selected from a linear polysiloxane, and a cyclic polysiloxane, optionally, the organopolysiloxane compound is selected from a linear polysiloxane.

4. The positive electrode material composition as claimed in claim 3, wherein the linear polysiloxane further comprises a capping group, optionally, the capping group comprises at least one functional groups selected from the group consisting of: polyether groups, C₁-C₈ alkyl groups, C₁-C₈ haloalkyl groups, C₁-C₈ heteroalkyl groups, C₁-C₈ haloheteroalkyl groups, C₂-C₈ alkenyl groups, C₂-C₈ haloalkenyl groups, C₆-C₂₀ aromatic hydrocarbyl groups, C₁-C₈ alkoxy groups, C₂-C₈ epoxy groups, hydroxyl groups, C₁-C₈ hydroxyalkyl groups, amino groups, C₁-C₈ aminoalkyl groups, carboxyl groups, and C₁-C₈ carboxyl alkyl groups.

5. The positive electrode material composition as claimed in any one of claims 3 to 4, wherein the linear polysiloxane comprises one or more of polydimethyl siloxane, polydiethyl siloxane, polymethyl ethyl siloxane, polymethyl vinyl siloxane, polyphenyl methyl siloxane, polymethyl hydrosiloxane, carboxyfunctionalized polysiloxane, polymethyl chloropropyl siloxane, polymethyl trifluoropropyl siloxane, perfluorooctyl methyl polysiloxane, mercaptopropyl polysiloxane, aminoethyl aminopropyl polydimethylsiloxane, methoxy terminated polydimethylsiloxane, hydroxypropyl terminated polydimethylsiloxane, aminopropyl terminated polydimethylsiloxane, epoxy end-capped polysiloxane, hydroxyl end-capped polydimethylsiloxane, polyether end-capped polydimethylsiloxane, pendent aminopropyl polysiloxane, pendent hydroxymethyl polysiloxane, pendent hydroxypropyl polysiloxane, pendent polyether-grafted polydimethylsiloxane, and pendent phosphate-grafted polydimethylsiloxane, optionally, one or more of polydimethyl siloxane, polymethyl chloropropyl siloxane, polymethyl trifluoropropyl siloxane, mercaptopropyl polysiloxane, aminoethyl aminopropyl polydimethylsiloxane, hydroxyl end-capped polydimethylsiloxane, polyether end-capped polydimethylsiloxane, pendent phosphate-grafted polydimethylsiloxane; and/or
the cyclic polysiloxane comprises one or more of cyclic polydimethylsiloxane, cyclic polymethyl vinyl siloxane, cyclic polymethyl hydrosiloxane, and cyclic polymethyl trifluoropropyl siloxane. Optionally, the cyclic polysiloxane comprises one or more of 1,3,5,7-octamethyl cyclotetrasiloxane, 1,3,5,7-tetrahydro-1,3,5,7-tetramethyl cyclotetrasiloxane, cyclopenta polydimethylsiloxane, 2,4,6,8-tetramethyl cyclotetrasiloxane, 2,4,6,8-tetramethyl-2,4,6,8-tetravinyl cyclotetrasiloxane, hexadecamethyl cyclooctasiloxane, and tetradecamethyl cycloheptasiloxane.

6. The positive electrode material composition as claimed in any one of claims 1 to 5, wherein the organopolysiloxane compound has a number average molecular weight of less than 300,000, optionally of from 400 to 80,000.

7. The positive electrode material composition as claimed in any one of claims 1 to 6, wherein a polar functional group is present in the organopolysiloxane compound in a mass percentage a, 0<a< 50%, optionally, 5%≤*α*≤30%.

8. The positive electrode material composition as claimed in any one of claims 1 to 7, wherein the organopolysiloxane compound is present in an amount of 0.01 wt% to 2 wt%, optionally 0.1 wt% to 2 wt%, based on the total weight of the positive electrode material composition.

9. The positive electrode material composition as claimed in any one of claims 1 to 8, wherein
said first cladding layer is applied in an amount of greater than 0 wt% and less than or equal to 7 wt%, optionally of from 4 wt% to 5.6 wt%, based on the weight of said core; and/or
said second cladding layer is applied in an amount of greater than 0 wt% and less than or equal to 6 wt%, optionally of from 3 wt% to 5 wt%, based on the weight of said core.

10. The positive electrode material composition as claimed in any one of claims 1 to 9, wherein
said first cladding layer contains phosphate salts having a crystal plane spacing of 0.345 nm to 0.358 nm, and a crystal orientation (111) angle of 24.25° to 26.45°; and/or
said first cladding layer contain pyrophosphate salts having a crystal plane spacing of 0.293 nm to 0.326 nm, and a crystal orientation (111) angle of from 26.41° to 32.57°.

11. The positive electrode material composition as claimed in any one of claims 1 to 10, wherein
in said core, a ratio of y to 1-y is from 1:10 to 10:1, optionally from 1:4 to 1:1; and/or
in said core, a ratio of z to 1-z is from 1:9 to 1:999, optionally from 1:499 to 1:249.

12. The positive electrode material composition as claimed in any one of claims 1 to 11, wherein
a weight ratio of pyrophosphate salts and phosphate salts in said first cladding layer is from 1:3 to 3:1, optionally from 1:3 to 1:1; and/or
the pyrophosphate salts and the phosphate salts in said first cladding layer each independently has a crystallinity of from 10% to 100%, optionally from 50% to 100%.

13. The positive electrode material composition as claimed in any one of claims 1 to 12, wherein said A is at least two elements selected from Fe, Ti, V, Ni, Co, and Mg.

14. The positive electrode material composition as claimed in any one of claims 1 to 13, wherein
the positive electrode active material satisfies at least one of the following conditions:
(1) said positive electrode active material has a Li/Mn antisite defect concentration of 4% or less, optionally of 2% or less;
(2) said positive electrode active material has a lattice change rate of 8% or less, optionally of 4% or less;
(3) said positive electrode active material has a surface oxygen valence of -1.88 or less, optionally -1.89 to -1.98; and
(4) said positive electrode active material has a compaction density of 2.0 g/cm³ or more, optionally 2.2 g/cm³ or more, at 3 tonnes.

15. The positive electrode material composition as claimed in any one of claims 1 to 14, further comprising a conductive agent and a binder, optionally, the binder is present in an amount of 1.79 wt% to 10 wt%, based on the total weight of the positive electrode material composition; optionally, the conductive agent is present in an amount of 0.2 wt% to 10 wt%, based on the total weight of the positive electrode material composition.

16. The positive electrode material composition as claimed in any one of claims 1 to 15, wherein
the positive electrode material composition has a powder resistivity of 4 Ω/cm to 55 Ω/cm, optionally from 4 Ω/cm to 40 Ω/cm at 12MPa; and/or
the positive electrode material composition has a specific surface area of 8 m²/g to 20 m²/g, optionally 8 m²/g to 15 m²/g.

17. A method for preparing a positive electrode material composition, comprising
a step of providing an core material, said core comprises Li₁₊ₓMn_{1-y}A_{y}P_{1-z}R_{z}O₄, wherein x is in the range of - 0.100 to 0.100, optionally in the range of -0.100 to 0.006, y is in the range of 0.001 to 0.500, optionally in the range of 0.100 to 0.450, z is in the range of 0.001 to 0.100, said A comprises one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co and Mg, and said R comprises one or more elements selected from B, Si, N and S;
a step of cladding, comprising providing an MP₂O₇ powder and an XPO₄ suspension comprising a carbon source, adding said core material, and MP₂O₇ powder to the XPO₄ suspension comprising a carbon source and mixing them followed by sintering, thereby obtaining a positive electrode active material, wherein said M and X each are independently one or more elements selected from Li, Fe, Ni, Mg, Co, Cu, Zn, Ti, Ag, Zr, Nb and Al, and the resulting positive electrode active material has a core-shell structure comprising said core and a shell covering said core, said shell comprises a first cladding layer covering said core and a second cladding layer covering said first cladding layer, said first cladding layer comprises pyrophosphate salts MP₂O₇ and phosphate salts XPO₄, and said second cladding layer comprises carbon; and
a step of mixing, comprising mixing the resulting positive electrode active material with an organopolysiloxane compound, an optional binder and an an optional conductive agent homogeneously to obtain a positive electrode material composition.

18. The method as claimed in claim 17, wherein the step of providing an core material comprises the following steps:
Step (1), dissolving a manganese source, a source of element A and an acid in a solvent with stirring to obtain particles of a manganese salt doped with element A;
Step (2), mixing the resulting particles of a manganese salt doped with element A with a lithium source, a phosphorus source, and a source of element R in a solvent with stirring to obtain a slurry and then sintering it under a protection of inert gas atmosphere, thereby obtaining lithium manganese phosphate doped with element A and element R wherein the lithium manganese phosphate doped with element A and element R is Li₁₊ₓMn_{1-y}A_{y}P_{1-z}R_{z}O₄, in which x is in the range of -0.100 to 0.100, optionally in the range of -0.100 to 0.006, y is in the range of 0.001 to 0.500, optionally in the range of 0.100 to 0.450, z is in the range of 0.001 to 0.100, said A comprises one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co and Mg, and said R comprises one or more elements selected from B, Si, N and S.

19. The method as claimed in claim 18, wherein
said step (1) is carried out at a temperature in the range of 20-120°C, optionally in the range of 25-80°C; and/or
stirring in said step (1) is carried out at a stirring rate of 500-700 rpm for 60-420 minutes, optionally for 120-360 minutes.

20. The method as claimed in any one of claims 18-19, wherein said source of element A is one or more selected from an elemental substance, a sulfate, a halide, a nitrate, an organic acid salt, an oxide or a hydroxide of element A; and/or said source of element R is one or more selected from an elemental substance, a sulfate, a halide, a nitrate, an organic acid salt, an oxide or a hydroxide of element A and an inorganic acid of element R.

21. The method as claimed in any one of claims 17-20, wherein said MP₂O₇ powder is prepared by: adding a source of element M and a source of phosphorus to a solvent to obtain a mixture, adjusting pH of the mixture to be from 4 to 6, stirring it and allowing it to react sufficiently, and then obtaining it after drying and sintering, wherein M is one ore more elements selected from Li, Fe, Ni, Mg, Co, Cu, Zn, Ti, Ag, Zr, Nb and Al.

22. The method as claimed in claim 21, wherein
said drying is carried out at 100°C to 300°C, optionally 150°C to 200°C for 4 hours to 8 hours; and/or
said sintering is carried out under an inert gas atmosphere at 500°C to 800°C, optionally 650°C to 800°C for 4 hours to 10 hours; and/or
said sintering temperature for obtaining the positive electrode active material in the step of cladding is from 500°C to 800°C, and said sintering time for obtaining the positive electrode active material in the step of cladding is from 4 hours to 10 hours.

23. A positive electrode plate comprising a positive electrode current collector and a positive electrode film layer provided on at least one surface of the positive electrode current collector, wherein said positive electrode film layer comprises the positive electrode material composition as claimed in any one of claims 1-16 or the positive electrode material composition prepared by the method as claimed in any one of claims 17-22, and said positive electrode material composition is present in said positive electrode film layer in a content of 50 wt% or more, optionally from 90 wt% to 100 wt%, based on total weight of said positive electrode film layer.

24. The positive electrode plate as claimed in claim 23, wherein said positive electrode plate satisfies at least one of the following conditions:
(1) the positive electrode film layer has a solid-liquid contact angle with a non-aqueous organic solvent of between 3° and 90°, optionally of between 3° and 60°, and more optionally of between 10° and 30°;
(2) the positive electrode film layer has a porosity of 15% to 50%, and optionally of 15% to 30%;
(3) said positive electrode film layer has a resistance of greater than 0 and less than or equal to 6 Ω;
(4) a bonding force between said positive electrode film layer and said positive electrode current collector is greater than or equal to 0.5 MPa;
(5) said positive electrode film layer has an areal density of from 0.006 g/cm² to 0.065 g/cm²; and
(6) said positive electrode film layer has a wicking rate of 0.0125 µg/s to 100 µg/s, optionally of 0.5 µg/s to 40 µg/s to an electrolytic solution.

25. A secondary battery comprising the positive electrode material composition as claimed in any one of claims 1-16, or the positive electrode material composition prepared by the method as claimed in any one of claims 17-22, or the positive electrode plate as claimed in any one of claims 23-24.

26. An electrical device comprising the secondary battery as claimed in claim 25.
